# EUROPEAN PATENT APPLICATION

(11) **EP 4 443 802 A1**
(43) Date of publication of application: **09.10.2024**
(21) Application number: 24166942.3
(22) Date of filing: 27.03.2024
(51) Int. Cl.: H04L 5/00, H04W 84/12, H04W 76/15

(54) **EMLSR SECONDARY CHANNEL OPERATION**

(30) Priority: 31.03.2023 US 202363493509 P; 26.03.2024 US 202418616430
(71) Applicant: Apple Inc., Cupertino, CA 95014 (US)
(72) Inventor: LAN, Zhou, Cupertino, 95014 (US); BATRA, Anuj, Cupertino, 95014 (US); ABOUELSEOUD, Mohamed, Cupertino, 95014 (US); YAMANAKA, Akira, Cupertino, 95014 (US); DOMINGUEZ, Charles F., Cupertino, 95014 (US); KNECKT, Jarkko L., Cupertino, 95014 (US); WANG, Qi, Cupertino, 95014 (US); HO, Keangpo R., Cupertino, 95014 (US); YANG, Baoguo, Cupertino, 95014 (US); BOGER, Yoel, Cupertino, 95014 (US); SHANI, Oren, Cupertino, 95014 (US); LIU, Yong, Cupertino, 95014 (US); YONG, Su Khiong, Cupertino, 95014 (US); EPSTEIN, Leonid, Cupertino, 95014 (US); JIANG, Jinjing, Cupertino, 95014 (US); GINSBURG, Noam, Cupertino, 95014 (US); FAN, Wen, Cupertino, 95014 (US)
(74) Representative: Wardle, Callum Tarn

(57) **Abstract**

Systems, methods, and mechanisms for secondary channel (SC) operation enhancements for enhanced multilink single-radio (eMLSR). An access point may transmit, to one or more wireless stations, one or more ICFs that may indicate that eMLSR-SC capable wireless stations are to switch to a secondary channel. The ICFs may be transmitted on a primary channel and one or more secondary channel(s). Further, the ICF may include a user information field that may include a resource unit index and a bandwidth index that in combination indicate that eMLSR-SC capable wireless stations are to switch to an indicated secondary channel. In addition, the access point may receive, from at least one wireless station of the one or more wireless stations, an IR frame that may indicate that the at least one wireless station has switched to the indicated secondary channel. Additionally, the access point may communicate on the secondary channel with the at least one wireless station.

## Description

### FIELD

The present application relates to wireless communications, including techniques for secondary channel operation enhancements for enhanced multilink single-radio (eMLSR), e.g., in current and future IEEE 802.11 systems.

### DESCRIPTION OF THE RELATED ART

In current implementations, a wireless local area network (WLAN) device (e.g., a wireless station) often needs to manage multiple Wi-Fi interfaces. For example, the WLAN device may need to manage an infrastructure Wi-Fi connection with an access point and a Wi-Fi peer-to-peer (P2P) connection with another WLAN device. Both of these connections may be on the same link. As another example, the WLAN device may need to manage co-existence between radio access technologies such Wi-Fi and Bluetooth. In addition, radio resources within the WLAN device are time shared by the infrastructure Wi-Fi connection, the P2P connection, and any co-existing radio access technologies. Given that the WLAN device dynamically time shares the radio resources between the various competing elements, communications may collide leading to a reduction in transmission rate which may not be suitable based on the reasons for failed transmissions and, as such, the transmission rate reduction may be undesirable. Therefore, improvements are desired.

### SUMMARY

Embodiments described herein relate to systems, methods, and mechanisms for secondary channel operation enhancements for enhanced multilink single-radio (eMLSR). In some embodiments described herein, existing eMLSR concepts (such as enabling switching channels/bands based on an initial control frame (ICF) received from an access point) may be leveraged to support wireless station operation on one or more secondary channel(s). In some embodiments, to support eMLSR-SC operation, a resource unit (RU) index setting of MU-RTS may be modified to allow CTS on secondary channels. Additionally, in some embodiments, to support eMLSR-SC operation, a capability bit for 80 or 160 MHz only eMLSR-SC STA may be added to indicates the capability of eMLSR-SC. Further, in some embodiments, to support eMLSR-SC operation, mixed bandwidth support and partial bandwidth sounding feedback may be made conditional mandatory for eMLSR-SC operation. In addition, in some embodiments, to support eMLSR-SC operation, a non-trigger based sounding procedure for eMLSR-SC operation and/or an 802.11ac beamforming poll may be disallowed. Additionally, in some embodiments, in order to enable eMLSR-SC operation to coexist with regular eMLSR operation, a coexistence protocol may include single or multiple initial control frame(s) (ICF) approach (e.g., in which an initial ICF triggers a channel switch without requiring a response prior to a standard ICF) and/or a single ICF approach (e.g., in which an existing ICF frame may be modified to allow for a frame check sum (FCS).

For example, in some embodiments, a wireless station may be configured to receive, from an access point, an ICF that may indicate that the wireless station (e.g., which may be eMLSR-SC capable) is to switch to a secondary channel. The ICF may include padding to allow the wireless station to switch to the secondary channel. In addition, the ICF may include a user information field that may indicate that eMLSR-SC capable wireless stations (e.g., the wireless station) are to switch to the secondary channel. Further, the wireless station may be configured to switch to the secondary channel, e.g., based on information included in the ICF, and transmit, to the access point, an immediate response (IR) frame that may indicate that the wireless station has switched to the secondary channel. Additionally, the wireless station may communicate on the secondary channel with the access point.

As another example, in some embodiments, an access point may be configured to transmit, to one or more wireless stations, an ICF that may indicate that eMLSR-SC capable wireless stations are to switch to a secondary channel. The ICF may include padding to allow eMLSR-SC capable wireless stations to switch to the secondary channel. The ICF may be transmitted on a primary channel and the secondary channel. Further, the ICF may include a user information field that may include a resource unit index and a bandwidth index that in combination indicate that eMLSR-SC capable wireless stations are to switch to a secondary channel. In addition, the access point may be configured to receive, from at least one wireless station of the one or more wireless stations, an IR frame that may indicate that the at least one wireless station has switched to the secondary channel. Additionally, the access point may be configured to communicate on the secondary channel with the at least one wireless station.

This Summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of the embodiments is considered in conjunction with the following drawings.
Figure 1 illustrates an example of a wireless communication system, according to some embodiments.
Figure 2A illustrates an example of wireless devices communicating, according to some embodiments.
Figure 2B illustrates an example simplified block diagram of a wireless device, according to some embodiments.
Figure 2C illustrates an example WLAN communication system, according to some embodiments.
Figure 3A illustrates an example simplified block diagram of a WLAN Access Point (AP), according to some embodiments.
Figure 3B illustrates an example simplified block diagram of a wireless station (UE), according to some embodiments.
Figure 3C illustrates an example simplified block diagram of a wireless node, according to some embodiments.
Figure 4 illustrates an example of a signaling sequence between an access point and an eMLSR-SC capable wireless station, according to some embodiments.
Figures 5A, 5B, and 5C illustrate examples of signaling sequences for downlink data transmission from an access point to multiple wireless stations, according to some embodiments.
Figure 6 illustrates an example of a resource map for downlink data transmission, according to some embodiments.
Figure 7 illustrates an example of a signaling sequence for downlink data transmission from an access point to multiple wireless stations using a multi-user block acknowledgment request (MU-BAR), according to some embodiments.
Figure 8 illustrates an example of a signaling sequence for downlink data transmission from an access point to multiple wireless stations using an immediate response (IR), according to some embodiments.
Figure 9 illustrates an example of a signaling sequence for uplink data transmission from multiple wireless stations to an access point, according to some embodiments.
Figures 10 and 11 illustrate examples of signaling sequences for unbalanced uplink data transmissions from multiple wireless stations to an access point, according to some embodiments.
Figure 12 illustrates an example of a signaling sequence for sounding reference frames, according to some embodiments.
Figure 13 illustrates examples of signaling for coexistence between multiple types of wireless stations, according to some embodiments.
Figures 14 and 15 illustrate examples of signaling sequences to allow wireless station channel switching, according to some embodiments.
Figures 16 and 17 illustrate examples of frame formats to support coexistence between multiple types of wireless stations, according to some embodiments.
Figures 18 and 19 illustrate block diagrams of examples of methods for wireless communications, according to some embodiments.

While the features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

### Acronyms

Various acronyms are used throughout the present application. Definitions of the most prominently used acronyms that may appear throughout the present application are provided below:
**UE:** User Equipment
**AP:** Access Point
**TX:** Transmission/Transmit
**RX:** Reception/Receive
**UWB:** Ultra-wideband
**BT/BLE:** BLUETOOTH^{™}/BLUETOOTH^{™} Low Energy
**LAN:** Local Area Network
**WLAN:** Wireless LAN
**RAT:** Radio Access Technology

### Terminology

The following is a glossary of terms used in this disclosure:
**Memory Medium** - Any of various types of non-transitory memory devices or storage devices. The term "memory medium" is intended to include an installation medium, e.g., a CD-ROM, floppy disks, or tape device; a computer system memory or random-access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The memory medium may include other types of non-transitory memory as well or combinations thereof. In addition, the memory medium may be located in a first computer system in which the programs are executed, or may be located in a second different computer system which connects to the first computer system over a network, such as the Internet. In the latter instance, the second computer system may provide program instructions to the first computer for execution. The term "memory medium" may include two or more memory mediums which may reside in different locations, e.g., in different computer systems that are connected over a network. The memory medium may store program instructions (e.g., embodied as computer programs) that may be executed by one or more processors.
**Carrier Medium** - a memory medium as described above, as well as a physical transmission medium, such as a bus, network, and/or other physical transmission medium that conveys signals such as electrical, electromagnetic, or digital signals.
**Computer System** - any of various types of computing or processing systems, including a personal computer system (PC), mainframe computer system, workstation, network appliance, Internet appliance, personal digital assistant (PDA), television system, grid computing system, or other device or combinations of devices. In general, the term "computer system" can be broadly defined to encompass any device (or combination of devices) having at least one processor that executes instructions from a memory medium.
**Positional Tag (or tracking device)** - any of various types of computer systems devices which are mobile or portable and which performs wireless communications, such as communication with a neighboring or companion device to share, determine, and/or update a location of the positional tag. Wireless communication can be via various protocols, including, but not limited to, Bluetooth, Bluetooth Low Energy (BLE), Wi-Fi, ultra-wide band (UWB), and/or one or more proprietary communication protocols.
**Mobile Device (or Mobile Station)** - any of various types of computer systems devices which are mobile or portable and which performs wireless communications using WLAN communication. Examples of mobile devices include mobile telephones or smart phones (e.g., iPhone^{™}, Android^{™}-based phones), and tablet computers such as iPad^{™}, Samsung Galaxy^{™}, etc. Various other types of devices would fall into this category if they include Wi-Fi or both cellular and Wi-Fi communication capabilities, such as laptop computers (e.g., MacBook^{™}), portable gaming devices (e.g., Nintendo DS^{™}, PlayStation Portable^{™}, Gameboy Advance^{™}, iPhone^{™}), portable Internet devices, and other handheld devices, as well as wearable devices such as smart watches, smart glasses, headphones, pendants, earpieces, etc. In general, the term "mobile device" can be broadly defined to encompass any electronic, computing, and/or telecommunications device (or combination of devices) which is easily transported by a user and capable of wireless communication using WLAN or Wi-Fi.
**Wireless Device (or Wireless Station)** - any of various types of computer systems devices which performs wireless communications using WLAN communications. As used herein, the term "wireless device" may refer to a mobile device, as defined above, or to a stationary device, such as a stationary wireless client or a wireless base station. For example, a wireless device may be any type of wireless station of an 802.11 system, such as an access point (AP) or a client station (STA or UE). Further examples include televisions, media players (e.g., AppleTV^{™}, Roku^{™}, Amazon FireTV^{™}, Google Chromecast^{™}, etc.), refrigerators, laundry machines, thermostats, and so forth.
**WLAN** - The term "WLAN" has the full breadth of its ordinary meaning, and at least includes a wireless communication network or RAT that is serviced by WLAN access points and which provides connectivity through these access points to the Internet. Most modern WLANs are based on IEEE 802.11 standards and are marketed under the name "Wi-Fi". A WLAN network is different from a cellular network.
**Processing Element** - refers to various implementations of digital circuitry that perform a function in a computer system. Additionally, processing element may refer to various implementations of analog or mixed-signal (combination of analog and digital) circuitry that perform a function (or functions) in a computer or computer system. Processing elements include, for example, circuits such as an integrated circuit (IC), ASIC (Application Specific Integrated Circuit), portions or circuits of individual processor cores, entire processor cores, individual processors, programmable hardware devices such as a field programmable gate array (FPGA), and/or larger portions of systems that include multiple processors.
**Automatically** - refers to an action or operation performed by a computer system (e.g., software executed by the computer system) or device (e.g., circuitry, programmable hardware elements, ASICs, etc.), without user input directly specifying or performing the action or operation. Thus, the term "automatically" is in contrast to an operation being manually performed or specified by the user, where the user provides input to directly perform the operation. An automatic procedure may be initiated by input provided by the user, but the subsequent actions that are performed "automatically" are not specified by the user, e.g., are not performed "manually", where the user specifies each action to perform. For example, a user filling out an electronic form by selecting each field and providing input specifying information (e.g., by typing information, selecting check boxes, radio selections, etc.) is filling out the form manually, even though the computer system must update the form in response to the user actions. The form may be automatically filled out by the computer system where the computer system (e.g., software executing on the computer system) analyzes the fields of the form and fills in the form without any user input specifying the answers to the fields. As indicated above, the user may invoke the automatic filling of the form, but is not involved in the actual filling of the form (e.g., the user is not manually specifying answers to fields but rather they are being automatically completed). The present specification provides various examples of operations being automatically performed in response to actions the user has taken.
**Concurrent** - refers to parallel execution or performance, where tasks, processes, signaling, messaging, or programs are performed in an at least partially overlapping manner. For example, concurrency may be implemented using "strong" or strict parallelism, where tasks are performed (at least partially) in parallel on respective computational elements, or using "weak parallelism", where the tasks are performed in an interleaved manner, e.g., by time multiplexing of execution threads.
**Configured to** - Various components may be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors may be configured to electrically connect a module to another module, even when the two modules are not connected). In some contexts, "configured to" may be a broad recitation of structure generally meaning "having circuitry that" performs the task or tasks during operation. As such, the component can be configured to perform the task even when the component is not currently on. In general, the circuitry that forms the structure corresponding to "configured to" may include hardware circuits.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

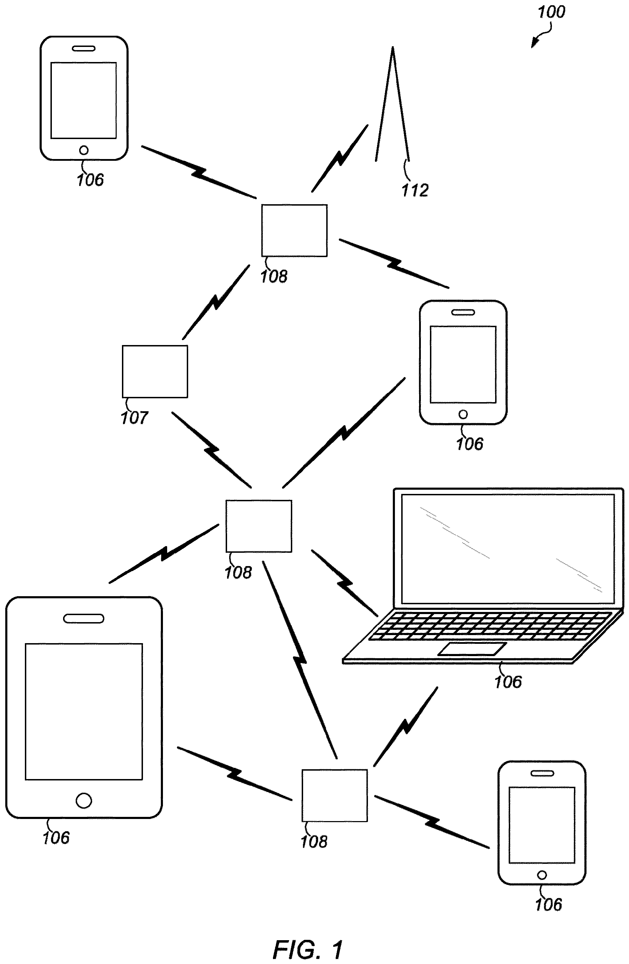

### Figure 1 - Wireless Communication System

Figure 1 illustrates an example wireless communication system, according to some embodiments. It is noted that the system of Figure 1 is merely one example of a possible system, and embodiments of this disclosure may be implemented in any of various systems, as desired. As shown, the exemplary system 100 includes a plurality of wireless client stations or devices, or user equipment (UEs), 106 that are configured to communicate wirelessly with various components within the system 100, such as an Access Point (AP) 112, other client stations 106, wireless nodes 107, and/or positional tag devices 108. Some implementations can include one or more base stations in addition to, or in place of, AP 112. The AP 112 may be a Wi-Fi access point and may include one or more other radios/access technologies (e.g., Bluetooth (BT), ultra-wide band (UWB), etc.) for wirelessly communicating with the various components of system 100. The AP 112 may communicate via wired and/or wireless communication channels with one or more other electronic devices (not shown) and/or another network, such as the Internet. The AP 112 may be configured to operate according to any of various communications standards, such as the various IEEE 802.11 standards as well as one or more proprietary communication standards, e.g., based on wideband, ultra-wideband, and/or additional short range/low power wireless communication technologies. In some embodiments, at least one client station 106 may be configured to communicate directly with one or more neighboring devices (e.g., other client stations 106, wireless nodes 107, and/or positional tag devices 108), without use of the access point 112 (e.g., peer-to-peer (P2P) or device-to-device (D2D)). As shown, wireless node 107 may be implemented as any of a variety of devices, such as wearable devices, gaming devices, and so forth. In some embodiments, wireless node 107 may be various Internet of Things (IoT) devices, such as smart appliances (e.g., refrigerator, stove, oven, dish washer, clothes washer, clothes dryer, and so forth), smart thermostats, and/or other home automation devices (e.g., such as smart electrical outlets, smart lighting fixtures, and so forth).

As shown, a positional tag device 108 may communicate with one or more other components within system 100. In some embodiments, positional tag device 108 may be associated with a companion device (e.g., a client station 106) and additionally be capable of communicating with one or more additional devices (e.g., other client stations 106, wireless nodes 107, AP 112). In some embodiments, communication with the companion device may be via one or more access technologies/protocols, such as BLUETOOTH^{™} (and/or BLUETOOTH^{™} (BT) Low Energy (BLE)), Wi-Fi peer-to-peer (e.g., Wi-Fi Direct, Neighbor Awareness Networking (NAN), and so forth), millimeter wave (mmWave) (e.g., 60GHz, such as 802.11 ad / ay), as well as any of various proprietary protocols (e.g., via wideband or ultra-wideband (UWB) and/or low and/or ultra-low power (LP/ULP) wireless communication). In some embodiments, communication with additional devices may be via BT/BLE as well as one or more other short-range peer-to-peer wireless communication techniques (e.g., various near-field communication (NFC) techniques, RFID, NAN, Wi-Fi Direct, UWB, LT/ULP, and so forth). In some embodiments, positional tag device 108 may be capable of updating a server with a current location (e.g., determined by tag device 108 and/or provided to tag device 108 from another device) via the one or more additional devices as well as via the companion device.

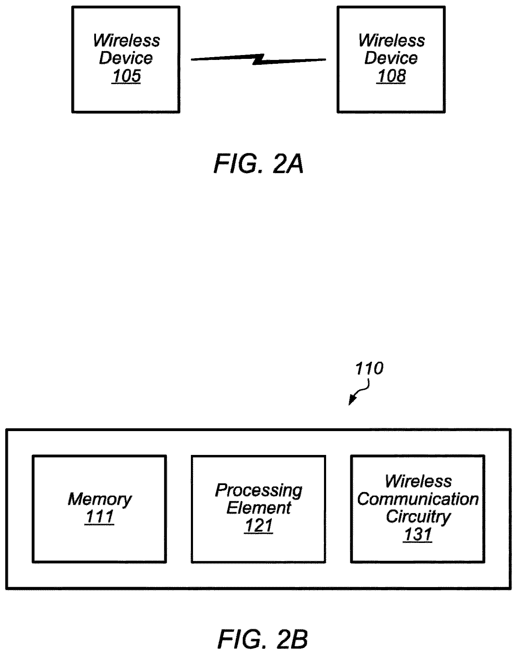

### Figures 2A-2B - Wireless Communication System

Figure 2A illustrates an exemplary (and simplified) wireless communication system in which aspects of this disclosure may be implemented. It is noted that the system of Figure 2A is merely one example of a possible system, and embodiments of this disclosure may be implemented in any of various systems, as desired.

As shown, the exemplary wireless communication system includes a ("first") wireless device 105 in communication with another ("second") wireless device 108. The first wireless device 105 and the second wireless device 108 may communicate wirelessly using any of a variety of wireless communication techniques.

As one possibility, the first wireless device 105 and the second wireless device 108 may perform communication using wireless local area networking (WLAN) communication technology (e.g., IEEE 802.11 / Wi-Fi based communication) and/or techniques based on WLAN wireless communication. One or both of the wireless device 105 and the wireless device 108 may also (or alternatively) be capable of communicating via one or more additional wireless communication protocols, such as any of BLUETOOTH^{™} (BT), BLUETOOTH^{™} Low Energy (BLE), near field communication (NFC), RFID, UWB, LP/ULP, UMTS (WCDMA, TDSCDMA), LTE, LTE-Advanced (LTE-A), NR, Wi-MAX, GPS, etc.

The wireless devices 105 and 108 may be any of a variety of types of wireless device. As one possibility, wireless device 105 may be a substantially portable wireless user equipment (UE) device, such as a smart phone, hand-held device, a laptop computer, a wearable device (such as a smart watch), a tablet, a motor vehicle, or virtually any type of wireless device. As another possibility, wireless device 105 may be a substantially stationary device, such as a payment kiosk/payment device, point of sale (POS) terminal, set top box, media player (e.g., an audio or audiovisual device), gaming console, desktop computer, appliance, door, access point, base station, or any of a variety of other types of device. The wireless device 108 may be a positional tag device, e.g., in a stand-alone form factor, associated with, attached to, and/or otherwise integrated into another computing device, and/or associated with, attached to, and/or integrated into a personal article or device (e.g., a wallet, a backpack, luggage, a briefcase, a purse, a key ring/chain, personal identification, and so forth) and/or a commercial article (e.g., a shipping container, shipping/storage pallet, an item of inventory, a vehicle, and so forth).

Each of the wireless devices 105 and 108 may include wireless communication circuitry configured to facilitate the performance of wireless communication, which may include various digital and/or analog radio frequency (RF) components, one or more processors configured to execute program instructions stored in memory, one or more programmable hardware elements such as a field-programmable gate array (FPGA), a programmable logic device (PLD), an application specific IC (ASIC), and/or any of various other components. The wireless device 105 and/or the wireless device 108 may perform any of the method embodiments or operations described herein, or any portion of any of the method embodiments or operations described herein, using any or all of such components.

Each of the wireless devices 105 and 108 may include one or more antennas and corresponding radio frequency front-end circuitry for communicating using one or more wireless communication protocols. In some cases, one or more parts of a receive and/or transmit chain may be shared between multiple wireless communication standards; for example, a device might be configured to communicate using BT/BLE or Wi-Fi using partially or entirely shared wireless communication circuitry (e.g., using a shared radio or one or more shared radio components). The shared communication circuitry may include a single antenna, or may include multiple antennas (e.g., for MIMO) for performing wireless communications. Alternatively, a device may include separate transmit and/or receive chains (e.g., including separate antennas and other radio components) for each wireless communication protocol with which it is configured to communicate. As a further possibility, a device may include one or more radios or radio components that are shared between multiple wireless communication protocols, and one or more radios or radio components that are used exclusively by a single wireless communication protocol. For example, a device might include a shared radio for communicating using one or more of LTE, and/or 5G NR, and one or more separate radios for communicating using Wi-Fi and/or BT/BLE. Other configurations are also possible.

As previously noted, aspects of this disclosure may be implemented in conjunction with the wireless communication system of Figure 2A. For example, a wireless device (e.g., either of wireless devices 105 or 108) may be configured to implement (and/or assist in implementation of) the methods described herein.

Figure 2B illustrates an exemplary wireless device 110 (e.g., corresponding to wireless devices 105 and/or 108) that may be configured for use in conjunction with various aspects of the present disclosure. The device 110 may be any of a variety of types of device and may be configured to perform any of a variety of types of functionality. The device 110 may be a substantially portable device or may be a substantially stationary device, potentially including any of a variety of types of device. The device 110 may be configured to perform any of the techniques or features illustrated and/or described herein, including with respect to any or all of the Figures.

As shown, the device 110 may include a processing element 121. The processing element may include or be coupled to one or more memory elements. For example, the device 110 may include one or more memory media (e.g., memory 111), which may include any of a variety of types of memory and may serve any of a variety of functions. For example, memory 111 could be RAM serving as a system memory for processing element 121. Additionally or alternatively, memory 111 could be ROM serving as a configuration memory for device 110. Other types and functions of memory are also possible.

Additionally, the device 110 may include wireless communication circuitry 131. The wireless communication circuitry may include any of a variety of communication elements (e.g., antenna for wireless communication, analog and/or digital communication circuitry/controllers, etc.) and may enable the device to wirelessly communicate using one or more wireless communication protocols.

Note that in some cases, the wireless communication circuitry 131 may include its own processing element(s) (e.g., a baseband processor), e.g., in addition to the processing element 121. For example, the processing element 121 may be an 'application processor' whose primary function may be to support application layer operations in the device 110, while the wireless communication circuitry 131 may be a 'baseband processor' whose primary function may be to support baseband layer operations (e.g., to facilitate wireless communication between the device 110 and other devices) in the device 110. In other words, in some cases the device 110 may include multiple processing elements (e.g., may be a multi-processor device). Other configurations (e.g., instead of or in addition to an application processor / baseband processor configuration) utilizing a multi-processor architecture are also possible.

The device 110 may additionally include any of a variety of other components (not shown) for implementing device functionality, depending on the intended functionality of the device 110, which may include further processing and/or memory elements (e.g., audio processing circuitry), one or more power supply elements (which may rely on battery power and/or an external power source) user interface elements (e.g., display, speaker, microphone, camera, keyboard, mouse, touchscreen, etc.), and/or any of various other components.

The components of the device 110, such as processing element 121, memory 111, and wireless communication circuitry 131, may be operatively (or communicatively) coupled via one or more interconnection interfaces, which may include any of a variety of types of interface, possibly including a combination of multiple types of interfaces. As one example, a USB high-speed inter-chip (HSIC) interface may be provided for inter-chip communications between processing elements. Alternatively (or in addition), a universal asynchronous receiver transmitter (UART) interface, a serial peripheral interface (SPI), inter-integrated circuit (I2C), system management bus (SMBus), and/or any of a variety of other communication interfaces may be used for communications between various device components. Other types of interfaces (e.g., intra-chip interfaces for communication within processing element 121, peripheral interfaces for communication with peripheral components within or external to device 110, etc.) may also be provided as part of device 110.

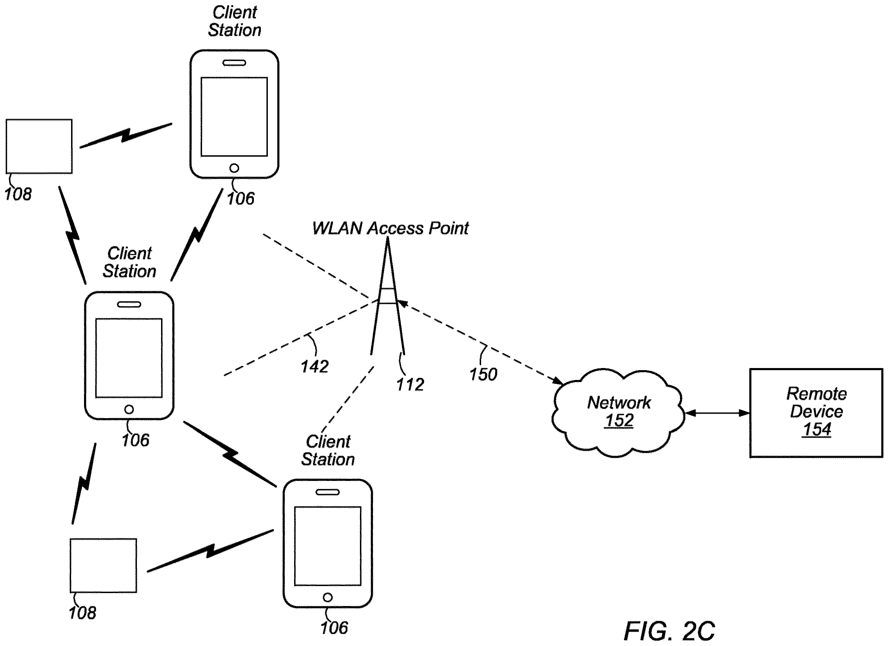

### Figure 2C - WLAN System

Figure 2C illustrates an example WLAN system according to some embodiments. As shown, the exemplary WLAN system includes a plurality of wireless client stations or devices, or user equipment (UEs), 106 that are configured to communicate over a wireless communication channel 142 with an Access Point (AP) 112. In some embodiments, the AP 112 may be a Wi-Fi access point. The AP 112 may communicate via wired and/or wireless communication channel(s) 150 with one or more other electronic devices (not shown) and/or another network 152, such as the Internet. Additional electronic devices, such as the remote device 154, may communicate with components of the WLAN system via the network 152. For example, the remote device 154 may be another wireless client station. The WLAN system may be configured to operate according to any of various communications standards, such as the various IEEE 802.11 standards. In some embodiments, at least one wireless device 106 is configured to communicate directly with one or more neighboring mobile devices, such as positional tag devices 108, without use of the access point 112.

Further, in some embodiments, as further described below, a wireless device 106 (which may be an exemplary implementation of device 110) may be configured to perform (and/or assist in performance of) the methods described herein.

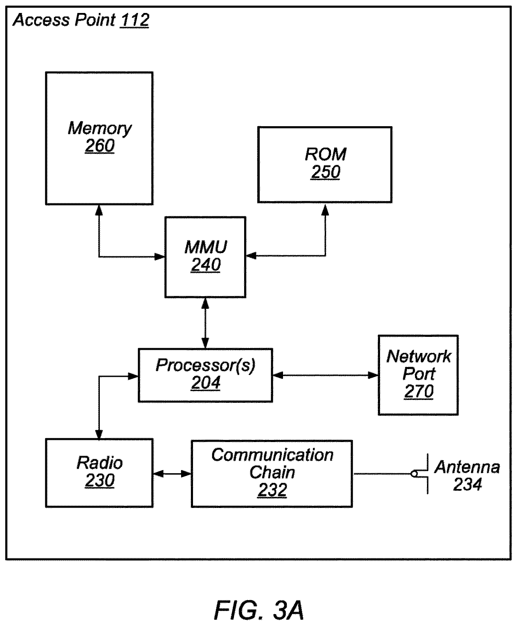

### Figure 3A - Access Point Block Diagram

Figure 3A illustrates an exemplary block diagram of an access point (AP) 112, which may be one possible exemplary implementation of the device 110 illustrated in Figure 2B. It is noted that the block diagram of the AP of Figure 3A is only one example of a possible system. As shown, the AP 112 may include processor(s) 204, which may execute program instructions for the AP 112. The processor(s) 204 may also be coupled (directly or indirectly) to memory management unit (MMU) 240, which may be configured to receive addresses from the processor(s) 204 and to translate those addresses into locations in memory (e.g., memory 260 and read only memory (ROM) 250) or to other circuits or devices.

The AP 112 may include at least one network port 270. The network port 270 may be configured to couple to a wired network and provide a plurality of devices, such as mobile devices 106, access to the Internet. For example, the network port 270 (or an additional network port) may be configured to couple to a local network, such as a home network or an enterprise network. For example, port 270 may be an Ethernet port. The local network may provide connectivity to one or more additional networks, such as the Internet.

The AP 112 may include at least one antenna 234 and wireless communication circuitry 230, which may be configured to operate as a wireless transceiver and may be further configured to communicate with mobile device 106 (as well as positional tag device 108). The antenna 234 communicates with the wireless communication circuitry 230 via communication chain 232. Communication chain 232 may include one or more receive chains and/or one or more transmit chains. The wireless communication circuitry 230 may be configured to communicate via Wi-Fi or WLAN, e.g., 802.11. The wireless communication circuitry 230 may also, or alternatively, be configured to communicate via various other wireless communication technologies, including, but not limited to, BT/BLE, UWB, and/or LP/ULP. Further, in some embodiments, the wireless communication circuitry 230 may also, or alternatively, be configured to communicate via various other wireless communication technologies, including, but not limited to, Long-Term Evolution (LTE), LTE Advanced (LTE-A), Wideband Code Division Multiple Access (WCDMA), etc., for example when the AP is co-located with a base station in case of a small cell, or in other instances when it may be desirable for the AP 112 to communicate via various different wireless communication technologies.

Further, in some embodiments, as further described below, AP 112 may be configured to perform (and/or assist in performance of) the methods described herein.

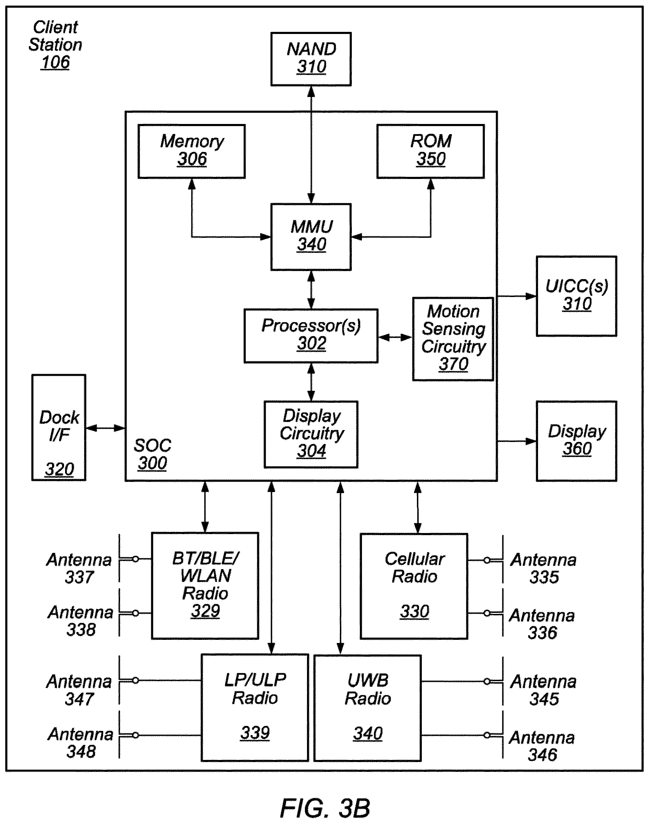

### Figure 3B - Client Station Block Diagram

Figure 3B illustrates an example simplified block diagram of a client station 106, which may be one possible exemplary implementation of the device 110 illustrated in Figure 2B. According to embodiments, client station 106 may be a user equipment (UE) device, a mobile device or mobile station, and/or a wireless device or wireless station. As shown, the client station 106 may include a system on chip (SOC) 300, which may include portions for various purposes. The SOC 300 may be coupled to various other circuits of the client station 106. For example, the client station 106 may include various types of memory (e.g., including NAND flash 310), a connector interface (I/F) (or dock) 320 (e.g., for coupling to a computer system, dock, charging station, etc.), the display 360, cellular communication circuitry 330 such as for LTE, etc., short to medium range wireless communication circuitry 329 (e.g., Bluetooth^{™} and WLAN circuitry), low power/ultra-low power (LP/ULP) radio 339, and ultra-wideband radio 341. The client station 106 may further include one or more smart cards 310 that incorporate SIM (Subscriber Identity Module) functionality, such as one or more UICC(s) (Universal Integrated Circuit Card(s)) cards 345. The cellular communication circuitry 330 may couple to one or more antennas, such as antennas 335 and 336 as shown. The short to medium range wireless communication circuitry 329 may also couple to one or more antennas, such as antennas 337 and 338 as shown. LP/ULP radio 339 may couple to one or more antennas, such as antennas 347 and 348 as shown. Additionally, UWB radio 341 may couple to one or more antennas, such as antennas 345 and 346. Alternatively, the radios may share one or more antennas in addition to, or instead of, coupling to respective antennas or respective sets of antennas. Any or all of the radios may include multiple receive chains and/or multiple transmit chains for receiving and/or transmitting multiple spatial streams, such as in a multiple-input multiple output (MIMO) configuration.

As shown, the SOC 300 may include processor(s) 302, which may execute program instructions for the client station 106 and display circuitry 304, which may perform graphics processing and provide display signals to the display 360. The SOC 300 may also include motion sensing circuitry 370, which may detect motion of the client station 106, for example using a gyroscope, accelerometer, and/or any of various other motion sensing components. The processor(s) 302 may also be coupled to memory management unit (MMU) 340, which may be configured to receive addresses from the processor(s) 302 and translate those addresses into locations in memory (e.g., memory 306, read only memory (ROM) 350, NAND flash memory 310) and/or to other circuits or devices, such as the display circuitry 304, cellular communication circuitry 330, short range wireless communication circuitry 329, LP/ULP communication circuitry 339, UWB communication circuitry 341, connector interface (I/F) 320, and/or display 360. The MMU 340 may be configured to perform memory protection and page table translation or set up. In some embodiments, the MMU 340 may be included as a portion of the processor(s) 302.

As noted above, the client station 106 may be configured to communicate wirelessly directly with one or more neighboring client stations and/or one or more positional tag devices 108. The client station 106 may be configured to communicate according to a WLAN RAT for communication in a WLAN network, such as that shown in Figure 2C. Further, in some embodiments, as further described below, client station 106 may be configured to perform (and/or assist in performance of) the methods described herein.

As described herein, the client station 106 may include hardware and/or software components for implementing the features described herein. For example, the processor 302 of the client station 106 may be configured to implement part or all of the features described herein, e.g., by executing program instructions stored on a memory medium (e.g., a non-transitory computer-readable memory medium). Alternatively (or in addition), processor 302 may be configured as a programmable hardware element, such as an FPGA (Field Programmable Gate Array), or as an ASIC (Application Specific Integrated Circuit). Alternatively (or in addition) the processor 302 of the UE 106, in conjunction with one or more of the other components 300, 304, 306, 310, 320, 329, 330, 335, 336, 337, 338, 339, 340, 341, 345, 346, 347, 348, 350, and/or 360 may be configured to implement part or all of the features described herein.

In addition, as described herein, processor 302 may include one or more processing elements. Thus, processor 302 may include one or more integrated circuits (ICs) that are configured to perform the functions of processor 302. In addition, each integrated circuit may include circuitry (e.g., first circuitry, second circuitry, etc.) configured to perform the functions of processor(s) 204.

Further, as described herein, cellular communication circuitry 330 and short-range wireless communication circuitry 329 may each include one or more processing elements. Thus, each of cellular communication circuitry 330 and short-range wireless communication circuitry 329 may include one or more integrated circuits (ICs) configured to perform the functions of cellular communication circuitry 330 and short-range wireless communication circuitry 329, respectively.

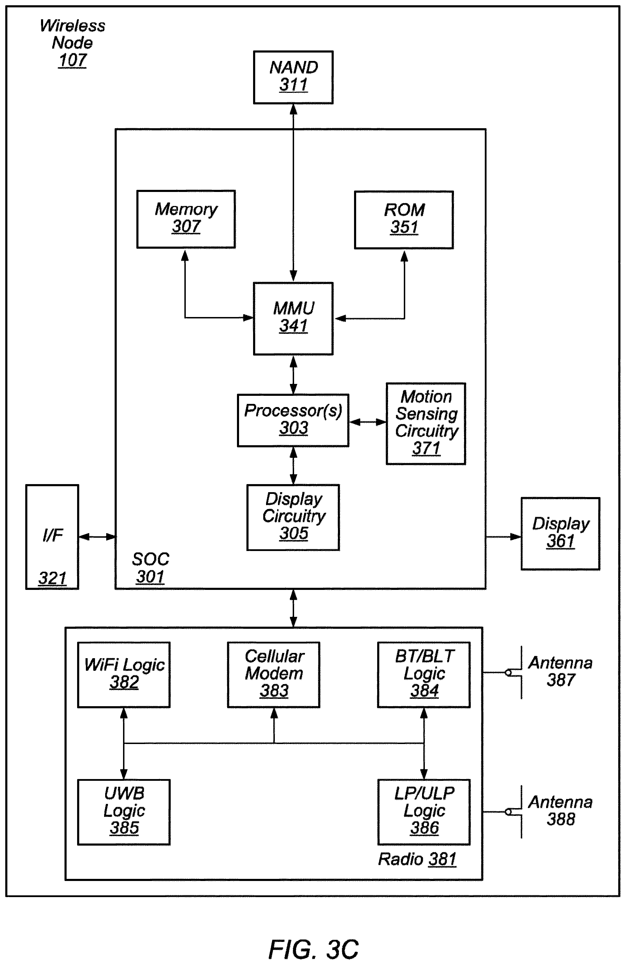

### Figure 3C - Wireless Node Block Diagram

Figure 3C illustrates one possible block diagram of a wireless node 107, which may be one possible exemplary implementation of the device 110 illustrated in Figure 2B. As shown, the wireless node 107 may include a system on chip (SOC) 301, which may include portions for various purposes. For example, as shown, the SOC 301 may include processor(s) 303 which may execute program instructions for the wireless node 107, and display circuitry 305 which may perform graphics processing and provide display signals to the display 361. The SOC 301 may also include motion sensing circuitry 371 which may detect motion of the wireless node 107, for example using a gyroscope, accelerometer, and/or any of various other motion sensing components. The processor(s) 303 may also be coupled to memory management unit (MMU) 341, which may be configured to receive addresses from the processor(s) 303 and translate those addresses to locations in memory (e.g., memory 307, read only memory (ROM) 351, flash memory 311). The MMU 341 may be configured to perform memory protection and page table translation or set up. In some embodiments, the MMU 341 may be included as a portion of the processor(s) 303.

As shown, the SOC 301 may be coupled to various other circuits of the wireless node 107. For example, the wireless node 107 may include various types of memory (e.g., including NAND flash 311), a connector interface 321 (e.g., for coupling to a computer system, dock, charging station, etc.), the display 361, and wireless communication circuitry (radio) 381 (e.g., for LTE, LTE-A, Bluetooth, Wi-Fi, NFC, GPS, UWB, LP/ULP, etc.).

The wireless node 107 may include at least one antenna, and in some embodiments, multiple antennas 387 and 388, for performing wireless communication with base stations and/or other devices. For example, the wireless node 107 may use antennas 387 and 388 to perform the wireless communication. As noted above, the wireless node 107 may in some embodiments be configured to communicate wirelessly using a plurality of wireless communication standards or radio access technologies (RATs).

The wireless communication circuitry (radio) 381 may include Wi-Fi Logic 382, a Cellular Modem 383, BT/BLE Logic 384, UWB logic 385, and LP/ULP logic 386. The Wi-Fi Logic 382 is for enabling the wireless node 107 to perform Wi-Fi communications, e.g., on an 802.11 network and/or via peer-to-peer communications (e.g., NAN). The BT/BLE Logic 384 is for enabling the wireless node 107 to perform Bluetooth communications. The cellular modem 383 may be capable of performing cellular communication according to one or more cellular communication technologies. The UWB logic 385 is for enabling the wireless node 107 to perform UWB communications. The LP/ULP logic 386 is for enabling the wireless node 107 to perform LP/ULP communications. Some or all components of the wireless communication circuitry 381 may be used for communications with a positional tag device 108.

As described herein, wireless node 107 may include hardware and software components for implementing embodiments of this disclosure. For example, one or more components of the wireless communication circuitry 381 of the wireless node 107 may be configured to implement part or all of the methods described herein, e.g., by a processor executing program instructions stored on a memory medium (e.g., a non-transitory computer-readable memory medium), a processor configured as an FPGA (Field Programmable Gate Array), and/or using dedicated hardware components, which may include an ASIC (Application Specific Integrated Circuit). For example, in some embodiments, as further described below, wireless node 107 may be configured to perform (and/or assist in the performance of) the methods described herein.

### eMLSR Secondary Channel Operation

In current implementations, extremely high throughput (EHT) access points (APs) typically support larger bandwidths (BWs) than clients (e.g., wireless stations or STAs). For example, APs operating according to Wi-Fi 7 protocols (or standards), support 160 megahertz (MHz) bandwidth whereas wireless stations operating according to Wi-Fi 7 protocols (or standards) support 80 MHz bandwidth. Thus, utilizing a secondary channel (e.g., upper 80 MHz) may improve quality of service (QoS) for stations, medium efficiency, and overall throughput.

IEEE 802.11ax defines a mechanism to support secondary channels - subchannel selective transmission (SST) and target wake time (TWT). Thus, high efficiency (HE) stations may be scheduled on secondary channels using SST. However, current implementations of Wi-Fi do not sufficiently support SST. In addition, SST has not been tested in Wi-Fi 6 or Wi-Fi 7. Therefore, improvements are desired.

Embodiments described herein relate to systems, methods, and mechanisms for secondary channel operation enhancements for enhanced multilink single-radio (eMLSR). For example, in some embodiments described herein, existing eMLSR concepts may be leveraged to support wireless station operation on a secondary channel. Note that eMLSR is expected to be widely supported in Wi-Fi 7 and enables switching channels/bands based on an initial control frame (ICF) received from an access point. Thus, eMLSR may provide more flexibility than TWT. In some embodiments, to support eMLSR-SC operation, a resource unit (RU) index setting of MU-RTS may be modified to allow CTS on secondary channels. Additionally, in some embodiments, to support eMLSR-SC operation, a capability bit for 80 MHz only eMLSR-SC STA may be added to indicates the capability of eMLSR-SC. Further, in some embodiments, to support eMLSR-SC operation, mixed bandwidth support and partial bandwidth sounding feedback may be made conditional mandatory for eMLSR-SC operation. In addition, in some embodiments, to support eMLSR-SC operation, a non-trigger based sounding procedure for eMLSR-SC operation and/or an 802.11ac beamforming poll may be disallowed. Additionally, in some embodiments, in order to enable eMLSR-SC operation to coexist with regular eMLSR operation, a coexistence protocol may include a two initial control frame (ICF) approach (e.g., in which an initial ICF triggers a channel switch without requiring a response prior to a standard ICF) and/or a single ICF approach (e.g., in which an existing ICF frame may be modified to allow for a 2 byte frame check sum (FCS)).

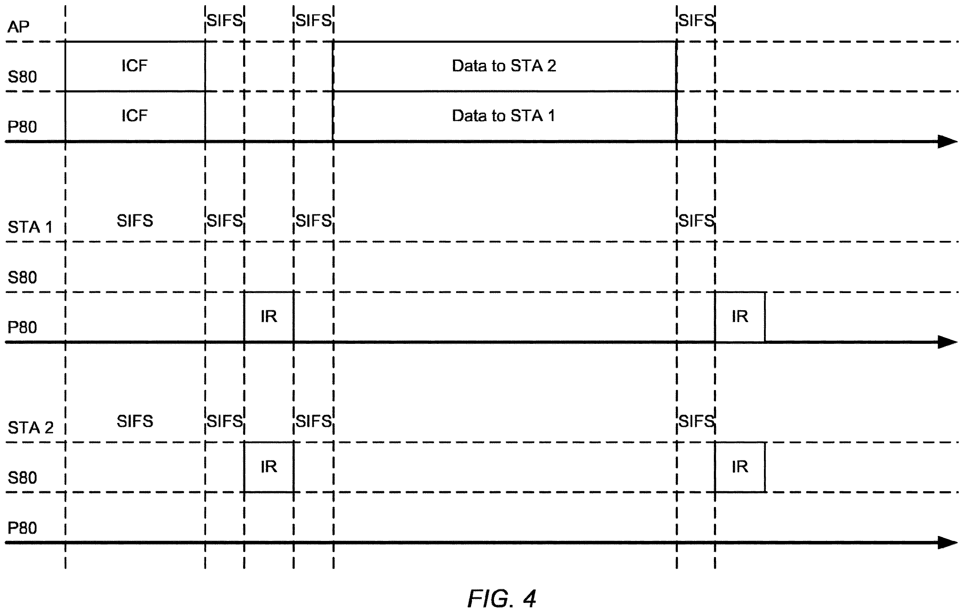

In some instances, since existing eMLSR rules may apply to eMLSR-secondary channel (eMLSR-SC), an ICF, received from an access point, such as AP 112, may inform an eMLSR-SC capable wireless station, such as wireless station 106, to switch to a secondary channel. The wireless station may respond to indicate that it has switched channels and that it is ready for downlink/uplink operation. Note that the ICF may include a padding field to allow the wireless station time to switch to the secondary channel. Once the wireless station confirms the cannel switch, data transmission between the access point and the wireless station may start on the secondary channel. In some instances, secondary channels may have virtual primary 20 MHz (VP20) defined where mapping of the VP20, VS20, VS40, and so forth follow the primary channels. For example, as illustrated by Figure 4, an access point, such as AP 112, may, after passing a clear channel access (CCA) check on a 160 MHz bandwidth, transmit/broadcast an ICF on a primary 80 MHz channel (e.g., P80 MHz (L)) and an ICF on a secondary 80 MHz channel (e.g., S80 MHz (U)). Each ICF may indicate that STA 2, which may be a wireless station 106 and eMLSR-SC capable, to use the secondary 80 MHz channel while STA 1, which may be another wireless station 106 and may or may not be eMLSR-SC capable, continues to use the primary 80 MHz channel. Note that the ICF may include padding to allow STA 2 to switch to the secondary 80 MHz channel. Then, after a short interframe space (SIFS), STA2 may transmit an immediate response (IR) frame in response to the ICF frame on the secondary 80 MHz channel and STA1 may transmit an IR frame in response to the ICF frame on the primary 80 MHz channel. Note that the IR from STA2 may indicate that STA2 is using the secondary 80 MHz channel. Then, after another SIFS, the access point may transmit data to STA1 on the primary 80 MHz channel and data to STA2 on the secondary 80 MHz channel. Further, after another SIFS, STA2 may transmit another IR frame in response to the data on the secondary 80 MHz channel and STA1 may transmit an IR frame in response to the data on the primary 80 MHz channel.

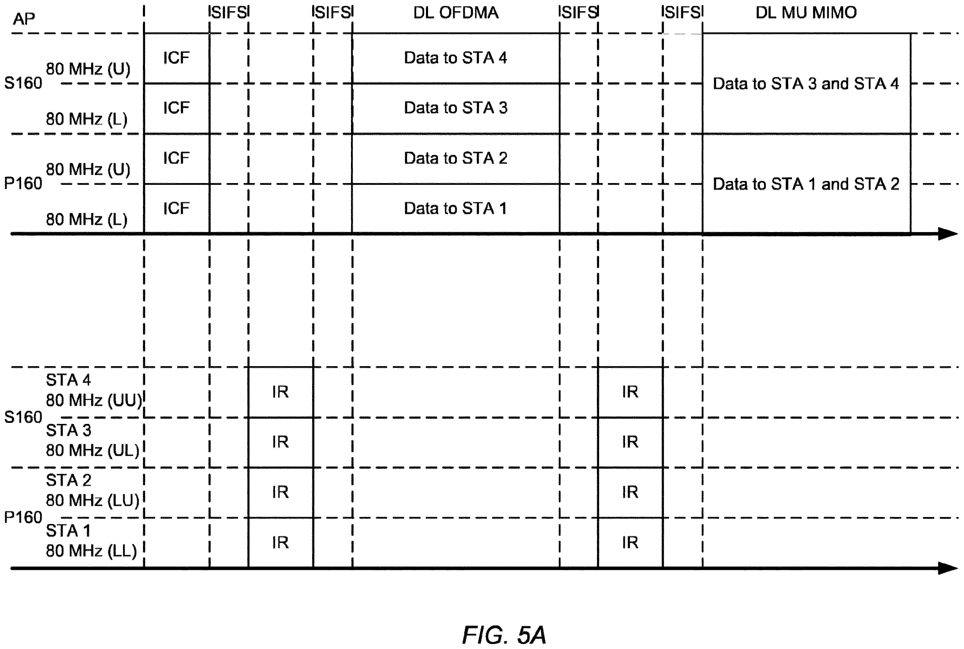

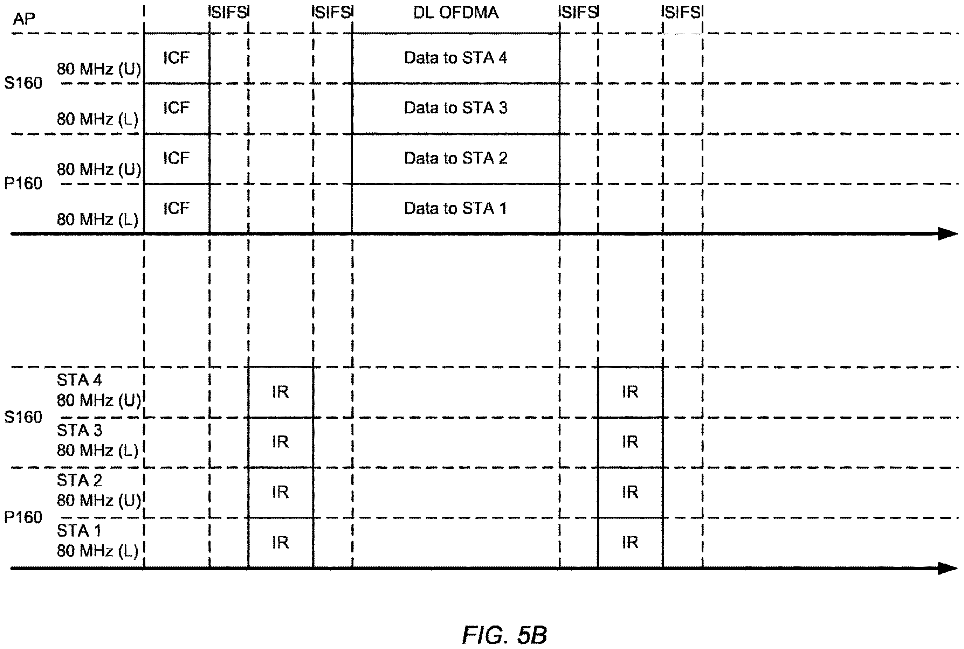

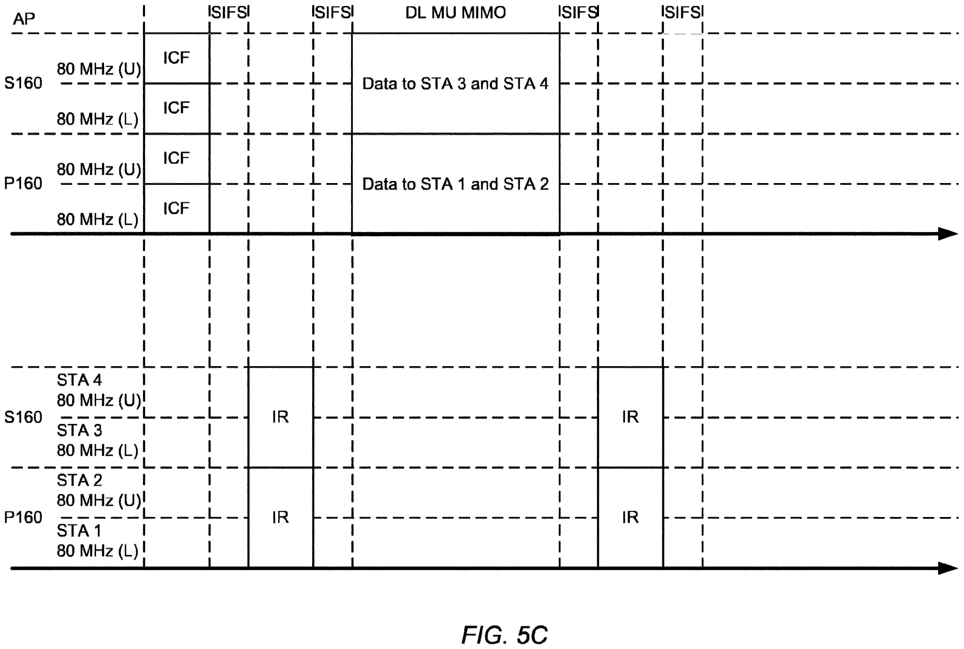

In some instances, a downlink multi-user (MU) eMLSR-SC sequence may proceed as illustrated by Figures 5A, 5B, and 5C. For example, such a sequence may initiate (or start) when an AP, such as AP 112, transmits (or broadcasts) an ICF that informs eMLSR-SC capable stations, such as one or more wireless stations 106, to switch to a secondary channel. Each eMLSR-SC capable station may respond to indicate a switch to a secondary channel. The indication may also inform the AP that such stations are ready for downlink and/or uplink operation. The AP may then transmit data to each station in a downlink (DL) MU physical layer packet data unit (PPDU) with either DL Orthogonal Frequency-Division Multiple Access (OFDMA) or DL MU multi-input-multi-output (MIMO). Each station may then respond by transmitting an Immediate Response (IR) in an uplink (UL) trigger based (TB) PPDU. For example, Figure 5A illustrates a combination of DL OFDMA and DL MU MIMO, Figure 5B illustrates an example of DL OFDMA, and Figure 5C illustrates an example of DL MU MIMO.

As shown in Figure 5A, an access point, such as AP 112, may, after passing a clear channel access (CCA) check on a 320 MHz bandwidth, transmit/broadcast an ICF on a primary 80 MHz channel (e.g., P80 MHz (LL 80)) and an ICF on a secondary 80 MHz channel (e.g., S80 MHz (LU 80)) of a primary 160 MHz channel (e.g., P160) and similarly transmit/broadcast an ICF on a primary 80 MHz channel (e.g., 80 MHz (UL 80)) and an ICF on a secondary 80 MHz channel (e.g., 80 MHz (UU 80)) of a secondary 160 MHz channel (e.g., S160). Each ICF may indicate eMLSR-SC capable stations, e.g., such as STA2, STA3, and STA4, which may each be a wireless station 106, switch to a secondary channel (e.g., the secondary 80 MHz channel on the primary 160 MHz channel and/or either of the 80 MHz channels on the secondary 160 MHz channel) while STA1, which may be another wireless station 106 and may not be eMLSR-SC capable, continues to use a primary channel. Note that the ICF may include padding to allow the eMLSR-SC capable stations to switch to a secondary 80 MHz channel. Then, after a short interframe space (SIFS), STA1 may transmit an immediate response (IR) frame in response to the ICF frame on the primary 80 MHz channel of the primary 160 MHz channel (e.g., LL 80), STA2 may transmit an IR frame in response to the ICF frame on the secondary 80 MHz channel of the primary 160 MHz channel (e.g., LU 80), STA3 may transmit an IR frame in response to the ICF frame on the primary 80 MHz channel of the secondary 160 MHz channel (e.g., UL 80), and STA4 may transmit an IR frame in response to the ICF frame on the secondary 80 MHz channel of the secondary 160 MHz channel (e.g., UU 80). Note that the IR from STA2 may indicate that STA2 is using the secondary 80 MHz channel of the primary 160 MHz channel (e.g., LU 80) and is ready for DL/UL operations, the IR from STA3 may indicate that STA3 is using the primary 80 MHz channel of the secondary 160 MHz channel (e.g., UL 80) and is ready for DL/UL operations, and the IR from STA4 may indicate that STA4 is using the secondary 80 MHz channel of the secondary 160 MHz channel (e.g., UU 80) and is ready for DL/UL operations. Then, after another SIFS, the access point may transmit downlink OFDMA data to STA1 on the primary 80 MHz channel of the primary 160 MHz channel (e.g., via DL MU PPDU), data to STA2 on the secondary 80 MHz channel of the primary 160 MHz channel (e.g., via DL MU PPDU), data to STA3 on the primary 80 MHz channel of the secondary 160 MHz channel (e.g., via DL MU PPDU), and data to STA4 on the secondary 80 MHz channel of the secondary 160 MHz channel (e.g., via DL MU PPDU). Further, after another SIFS, STA1 may transmit another IR frame in response to the data on the primary 80 MHz channel of the primary 160 MHz channel (e.g., LL 80) (e.g., via UL trigger based (TB) PPDU), STA2 may transmit another IR frame in response to the data on the secondary 80 MHz channel of the primary 160 MHz channel (e.g., LU 80) (e.g., via UL TB PPDU), STA3 may transmit another IR frame in response to the data on the primary 80 MHz channel of the secondary 160 MHz channel (e.g., UL 80) (e.g., via UL TB PPDU), and STA4 may transmit another IR frame in response to the data on the secondary 80 MHz channel of the secondary 160 MHz channel (e.g., UU 80) (e.g., via UL TB PPDU). Additionally, after another SIFS, the access point may transmit DL MU MIMO data to STA1 and STA2 on the primary 160 MHz channel (e.g., via DL MU PPDU) and to STA3 and STA4 on the secondary 160 MHz channel (e.g., via DL MU PPDU). After another SIFS, STA1 may transmit another IR frame in response to the data on the primary 80 MHz channel of the primary 160 MHz channel (e.g., LL 80) (e.g., via UL TB PPDU), STA2 may transmit another IR frame in response to the data on the secondary 80 MHz channel of the primary 160 MHz channel (e.g., LU 80) (e.g., via UL TB PPDU), STA3 may transmit another IR frame in response to the data on the primary 80 MHz channel of the secondary 160 MHz channel (e.g., UL 80) (e.g., via UL TB PPDU), and STA4 may transmit another IR frame in response to the data on the secondary 80 MHz channel of the secondary 160 MHz channel (e.g., UU 80) (e.g., via UL TB PPDU).

As shown in Figure 5B, an access point, such as AP 112, may, after passing a clear channel access (CCA) check on a 320 MHz bandwidth, transmit/broadcast an ICF on a primary 80 MHz channel (e.g., P80 MHz (LL 80)) and an ICF on a secondary 80 MHz channel (e.g., S80 MHz (LU 80)) of a primary 160 MHz channel (e.g., P160) and similarly transmit/broadcast an ICF on a primary 80 MHz channel (e.g., 80 MHz (UL 80)) and an ICF on a secondary 80 MHz channel (e.g., 80 MHz (UU 80)) of a secondary 160 MHz channel (e.g., S160). Each ICF may indicate eMLSR-SC capable stations, e.g., such as STA2, STA3, and STA4, which may each be a wireless station 106, switch to a secondary channel (e.g., the secondary 80 MHz channel on the primary 160 MHz channel and/or either of the 80 MHz channels on the secondary 160 MHz channel) while STA1, which may be another wireless station 106 and may not be eMLSR-SC capable, continues to use a primary channel. Note that the ICF may include padding to allow the eMLSR-SC capable stations to switch to a secondary 80 MHz channel. Then, after a short interframe space (SIFS), STA1 may transmit an immediate response (IR) frame in response to the ICF frame on the primary 80 MHz channel of the primary 160 MHz channel (e.g., LL 80), STA2 may transmit an IR frame in response to the ICF frame on the secondary 80 MHz channel of the primary 160 MHz channel (e.g., LU 80), STA3 may transmit an IR frame in response to the ICF frame on the primary 80 MHz channel of the secondary 160 MHz channel (e.g., UL 80), and STA4 may transmit an IR frame in response to the ICF frame on the secondary 80 MHz channel of the secondary 160 MHz channel (e.g., UU 80). Note that the IR from STA2 may indicate that STA2 is using the secondary 80 MHz channel of the primary 160 MHz channel (e.g., LU 80) and is ready for DL/UL operations, the IR from STA3 may indicate that STA3 is using the primary 80 MHz channel of the secondary 160 MHz channel (e.g., UL 80) and is ready for DL/UL operations, and the IR from STA4 may indicate that STA4 is using the secondary 80 MHz channel of the secondary 160 MHz channel (e.g., UU 80) and is ready for DL/UL operations. Then, after another SIFS, the access point may transmit downlink OFDMA data to STA1 on the primary 80 MHz channel of the primary 160 MHz channel (e.g., via DL MU PPDU), data to STA2 on the secondary 80 MHz channel of the primary 160 MHz channel (e.g., via DL MU PPDU), data to STA3 on the primary 80 MHz channel of the secondary 160 MHz channel (e.g., via DL MU PPDU), and data to STA4 on the secondary 80 MHz channel of the secondary 160 MHz channel (e.g., via DL MU PPDU). Further, after another SIFS, STA1 may transmit another IR frame in response to the data on the primary 80 MHz channel of the primary 160 MHz channel (e.g., LL 80) (e.g., via UL TB PPDU), STA2 may transmit another IR frame in response to the data on the secondary 80 MHz channel of the primary 160 MHz channel (e.g., LU 80) (e.g., via UL TB PPDU), STA3 may transmit another IR frame in response to the data on the primary 80 MHz channel of the secondary 160 MHz channel (e.g., UL 80) (e.g., via UL TB PPDU), and STA4 may transmit another IR frame in response to the data on the secondary 80 MHz channel of the secondary 160 MHz channel (e.g., UU 80) (e.g., via UL TB PPDU).

As shown in Figure 5C, an access point, such as AP 112, may, after passing a clear channel access (CCA) check on a 320 MHz bandwidth, transmit/broadcast an ICF on a primary 80 MHz channel (e.g., P80 MHz (LL 80)) and an ICF on a secondary 80 MHz channel (e.g., S80 MHz (LU 80)) of a primary 160 MHz channel (e.g., P160) and similarly transmit/broadcast an ICF on a primary 80 MHz channel (e.g., 80 MHz (UL 80)) and an ICF on a secondary 80 MHz channel (e.g., 80 MHz (UU 80)) of a secondary 160 MHz channel (e.g., S160). Each ICF may indicate eMLSR-SC capable stations, e.g., such as STA2, STA3, and STA4, which may each be a wireless station 106, switch to a secondary channel (e.g., the secondary 80 MHz channel on the primary 160 MHz channel and/or either of the 80 MHz channels on the secondary 160 MHz channel) while STA1, which may be another wireless station 106 and may not be eMLSR-SC capable, continues to use a primary channel. Note that the ICF may include padding to allow the eMLSR-SC capable stations to switch to a secondary 80 MHz channel. Then, after a short interframe space (SIFS), STA1 may transmit an immediate response (IR) frame in response to the ICF frame on the primary 80 MHz channel of the primary 160 MHz channel (e.g., LL 80), STA2 may transmit an IR frame in response to the ICF frame on the secondary 80 MHz channel of the primary 160 MHz channel (e.g., LU 80), STA3 may transmit an IR frame in response to the ICF frame on the primary 80 MHz channel of the secondary 160 MHz channel (e.g., UL 80), and STA4 may transmit an IR frame in response to the ICF frame on the secondary 80 MHz channel of the secondary 160 MHz channel (e.g., UU 80). Note that the IR from STA2 may indicate that STA2 is using the secondary 80 MHz channel of the primary 160 MHz channel (e.g., LU 80) and is ready for DL/UL operations, the IR from STA3 may indicate that STA3 is using the primary 80 MHz channel of the secondary 160 MHz channel (e.g., UL 80) and is ready for DL/UL operations, and the IR from STA4 may indicate that STA4 is using the secondary 80 MHz channel of the secondary 160 MHz channel (e.g., UU 80) and is ready for DL/UL operations. Then, the access point may transmit DL MU MIMO data to STA1 and STA2 on the primary 160 MHz channel (e.g., via DL MU PPDU) and to STA3 and STA4 on the secondary 160 MHz channel (e.g., via DL MU PPDU). After another SIFS, STA1 may transmit another IR frame in response to the data on the primary 80 MHz channel of the primary 160 MHz channel (e.g., LL 80) (e.g., via UL TB PPDU), STA2 may transmit another IR frame in response to the data on the secondary 80 MHz channel of the primary 160 MHz channel (e.g., LU 80) (e.g., via UL TB PPDU), STA3 may transmit another IR frame in response to the data on the primary 80 MHz channel of the secondary 160 MHz channel (e.g., UL 80) (e.g., via UL TB PPDU), and STA4 may transmit another IR frame in response to the data on the secondary 80 MHz channel of the secondary 160 MHz channel (e.g., UU 80) (e.g., via UL TB PPDU).

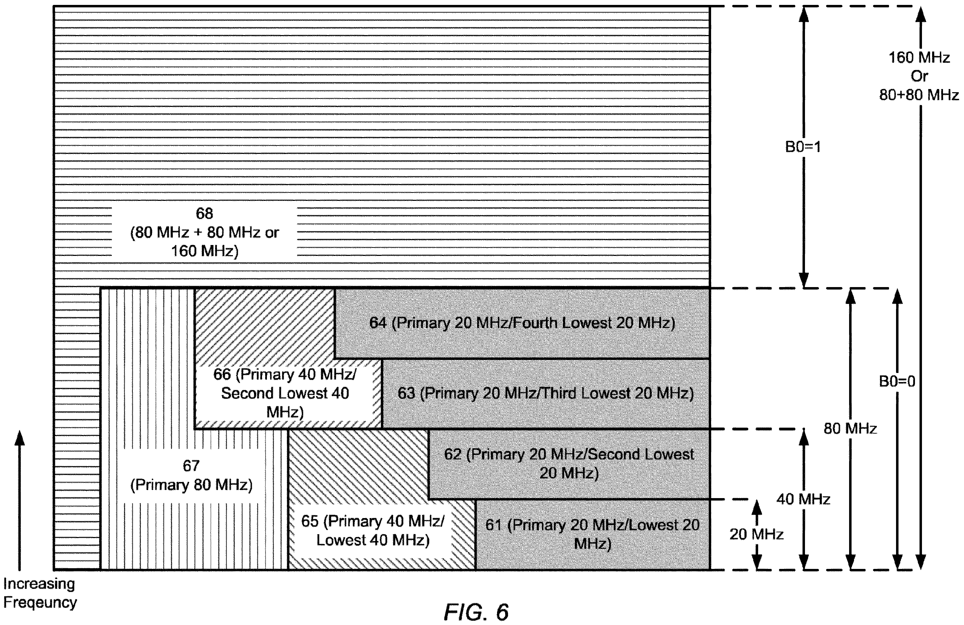

In some instances, a multi-user (MU) request-to-send (MU-RTS) frame and/or a buffer status report probe (BSRP) frame may be used by an access point, such as AP 112, as an ICF to inform an eMLSR-SC station, such as wireless station 106, to switch to a secondary channel. In such instances, a User Info field in the MU-RTS/BSRP frame may be used to communicate a resource unit (RU) index for the secondary channel. For example, as illustrated by Figure 6, an RU index may be set to 67 and a B0 to 1 to inform/indicate to the eMLSR-SC station to switch to secondary channel 80 (S80). In addition, a clear-to-send (CTS) frame and/or a buffer status report (BSR) frame may be used by the eMLSR-SC station as an Immediate Response (IR) frame to indicate that the eMLSR-SC station has completed the channel switch. For example, the eMLSR-SC station may transmit a CTS frame on S80. Note that downlink data will be transmitted on a primary channel for a station on the primary channel and on the secondary channel for the eMLSR-SC station that switched to the secondary channel (e.g., follows the IR). Note further that other ICFs may also be used to initiate the eMLSR-SC operation. Note additionally, that an MU-RTS frame and a CTS frame may be considered mandatory when communicating with eMLSR-SC stations on a secondary channel. In some instances, the eMLSR-SC station may switch back to the primary channel based on an ending procedure similar to regular eMLSR operation. Further, in some instances, capability bits in a MU-RTS/BSRP/CTS/BSR frames to indicate eMLSR-SC operation and eMLSR-SC only stations.

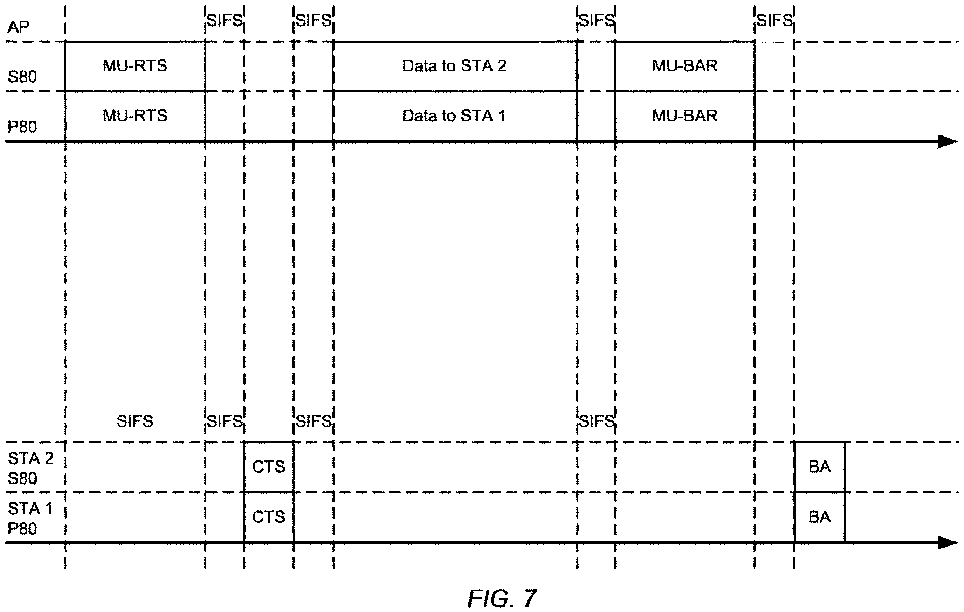

In some instances, an access point, such as AP 112, may transmit a MU block acknowledgement request (MU-BAR) frame as part of an eMLSR-SC downlink data sequence. For example, as illustrated by Figure 7, an access point may transmit a MU-BAR frame after transmitting data on primary and secondary channels. As shown, the access point may transmit a MU-RTS frame on a primary 80 MHz channel and a secondary 80 MHz channel of a primary 160 MHz channel. The MU-RTS frame may include user information fields for a first wireless station (e.g., STA1) and a second wireless station (e.g., STA2). Note that the first and second wireless stations may each be a wireless station 106. Note further that the second wireless station may be eMLSR-SC capable. The user information field may indicate a resource unit (RU) index and a sub-channel (e.g., via a B0 parameter). Thus, the MU-RTS frame may indicate an RU index of 67 for the first wireless station and the second wireless station and a B0 value of 0 for the first wireless station (e.g., indicating a primary sub-channel) and a B0 value of 1 for the second wireless station (e.g., indicating a secondary sub-channel). After a SIFS, the first wireless station may transmit a CTS frame to the access point on the primary 80 MHz channel (e.g., primary sub-channel) and the second wireless station may transmit a CTS frame to the access point on the secondary 80 MHz channel (e.g., secondary sub-channel). The access point may then transmit data to the first wireless station on the primary 80 MHz channel and data to the second wireless station of the secondary 80 MHz channel after another SIFS. Further, after another SIFS, the access point may transmit a MU-BAR frame the first wireless station on the primary 80 MHz channel and a MU-BAR frame to the second wireless station of the secondary 80 MHz channel. The MU-BAR frame may include user information fields for the first wireless station (e.g., STA1) and the second wireless station (e.g., STA2). The user information field may indicate a resource unit (RU) index and a sub-channel (e.g., via a B0 parameter). Thus, the MU-BAR frame may indicate an RU index of 67 for the first wireless station and the second wireless station and a B0 value of 0 for the first wireless station (e.g., indicating a primary sub-channel) and a B0 value of 1 for the second wireless station (e.g., indicating a secondary sub-channel). Then, after a SIFS, the first wireless station may transmit a BA frame to the access point on the primary 80 MHz channel and the second wireless station may transmit a BA frame to the access point on the secondary 80 MHz channel.

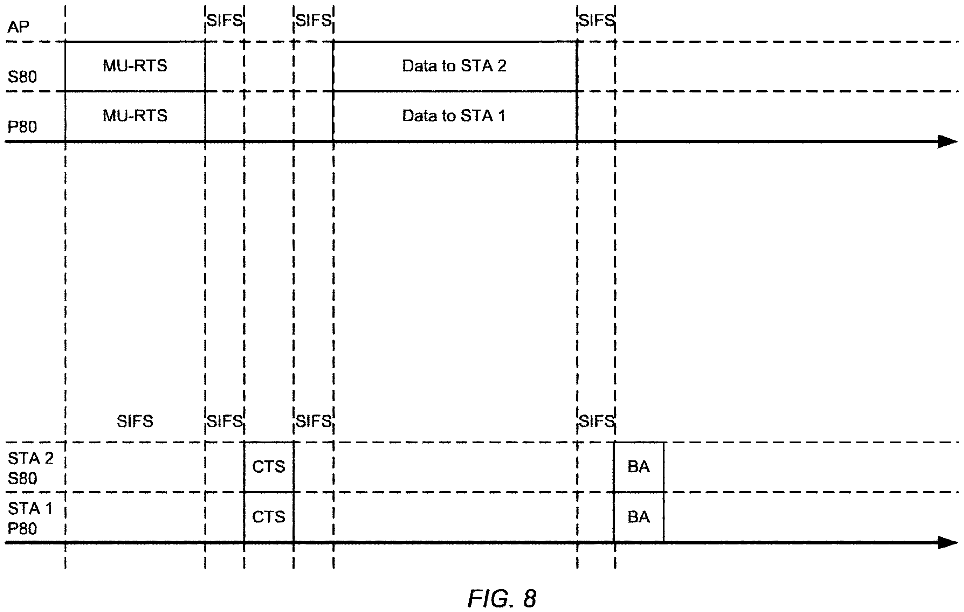

In some instances, an access point, such as AP 112, may receive a block acknowledgement from wireless stations as an immediate response to transmitting downlink data on primary and secondary channels. For example, as illustrated by Figure 8, the access point may transmit a MU-RTS frame on a primary 80 MHz channel and a secondary 80 MHz channel of a primary 160 MHz channel. The MU-RTS frame may include user information fields for a first wireless station (e.g., STA1) and a second wireless station (e.g., STA2). Note that the first and second wireless stations may each be a wireless station 106. Note further that the second wireless station may be eMLSR-SC capable. The user information field may indicate a resource unit (RU) index and a sub-channel (e.g., via a B0 parameter). Thus, the MU-RTS frame may indicate an RU index of 67 for the first wireless station and the second wireless station and a B0 value of 0 for the first wireless station (e.g., indicating a primary sub-channel) and a B0 value of 1 for the second wireless station (e.g., indicating a secondary sub-channel). After a SIFS, the first wireless station may transmit a CTS frame to the access point on the primary 80 MHz channel (e.g., primary sub-channel) and the second wireless station may transmit a CTS frame to the access point on the secondary 80 MHz channel (e.g., secondary sub-channel). The access point may then transmit data to the first wireless station on the primary 80 MHz channel and data to the second wireless station of the secondary 80 MHz channel after another SIFS. Further, after another SIFS, the first wireless station may transmit a BA frame to the access point on the primary 80 MHz channel and the second wireless station may transmit a BA frame to the access point on the secondary 80 MHz channel.

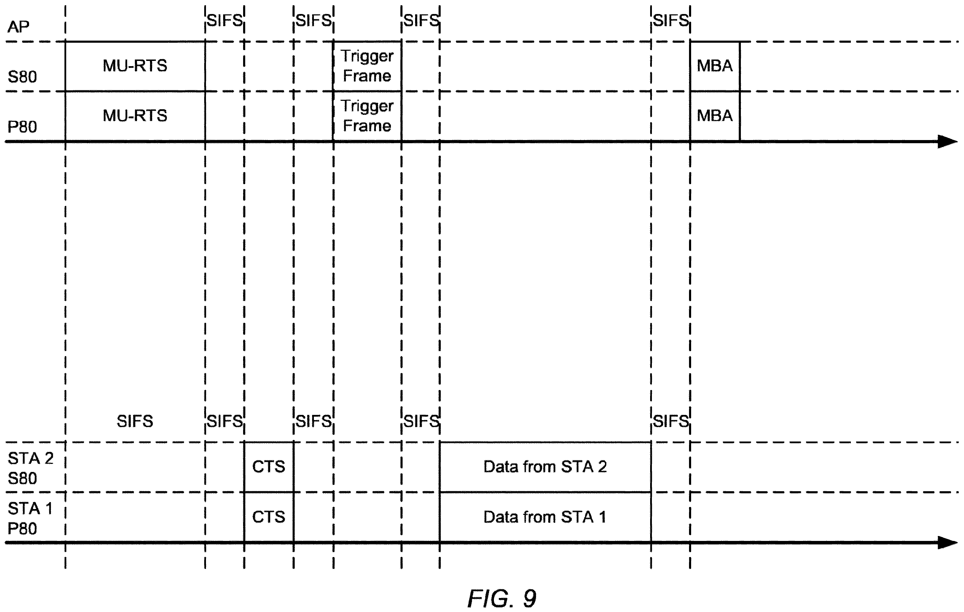

In some instances, a multi-user (MU) request-to-send (MU-RTS) frame and/or a buffer status report probe (BSRP) frame may be used by an access point, such as AP 112, as an ICF to inform an eMLSR-SC station, such as wireless station 106, to switch to a secondary channel. In such instances, a User Info field in the MU-RTS/BSRP frame may be used to communicate a resource unit (RU) index for the secondary channel. For example, as illustrated by Figure 9, an RU index may be set to 67 and a B0 to 1 to inform/indicate to the eMLSR-SC station to switch to secondary channel 80 (S80). In addition, a clear-to-send (CTS) frame and/or a buffer status report (BSR) frame may be used by the eMLSR-SC station as an Immediate Response (IR) frame to indicate that the eMLSR-SC station has completed the channel switch. For example, the eMLSR-SC station may transmit a CTS frame on S80. The access point may then transmit a trigger frame to initiate transmissions from eMLSR-SC stations using trigger based (TB) PPDU format. The eMLSR-SC stations may then use their allocated resource units (RUs) (e.g., either inside P80 or S80 for 160 MHz BSS operation) to transmit data to the access point. Note that that an MU-RTS frame and a CTS frame may be considered mandatory when communicating with eMLSR-SC stations on a secondary channel. In some instances, the eMLSR-SC station may switch back to the primary channel based on an ending procedure similar to regular eMLSR operation. Further, in some instances, enhanced distributed channel access (EDCA) may not be allowed on a secondary channel. Additionally, in some instances, capability bits in a MU-RTS/BSRP/CTS/BSR frames to indicate eMLSR-SC operation and eMLSR-SC only stations.

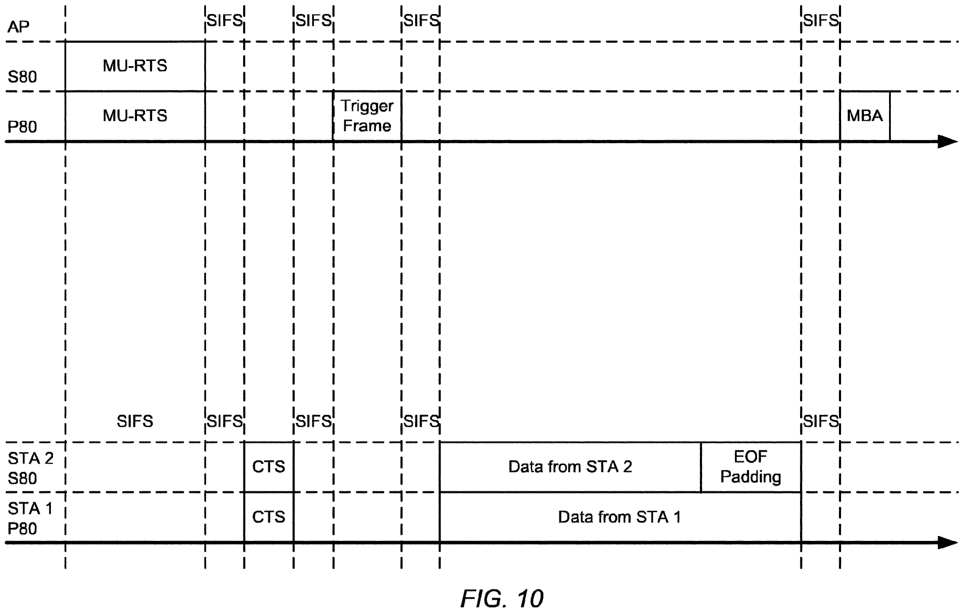

In some instances, to handle unbalanced traffic (e.g., different transmit opportunities) among multiple stations during uplink data transmissions, end of frame (EOF) padding may be used to align end of packets across multiple stations, e.g., as illustrated by Figure 10. As shown, an access point may, such as AP 112, may transmit a MU-RTS frame on a primary 80 MHz channel and a secondary 80 MHz channel of a primary 160 MHz channel. The MU-RTS frame may include user information fields for a first wireless station (e.g., STA1) and a second wireless station (e.g., STA2). Note that the first and second wireless stations may each be a wireless station 106. Note further that the second wireless station may be eMLSR-SC capable. The user information field may indicate a resource unit (RU) index and a sub-channel (e.g., via a B0 parameter) for the first and second wireless stations to use for communications with the access point. After a SIFS, the first wireless station may transmit a CTS frame to the access point on the primary 80 MHz channel and the second wireless station may transmit a CTS frame to the access point on the primary 80 MHz channel. The access point may then transmit a basic trigger frame on the primary 80 MHz channel after a SIFS. Then after another SIFS, the first wireless station may transmit data on the primary 80 MHz channel and the second wireless station may transmit data on the secondary 80 MHz channel with padding after the data (e.g., end-of-frame (EOF) padding) to align an endpoint of the data with data transmitted from the first wireless station. Further, after another SIFS, the access point may transmit a multi-station block acknowledgement (MBA) frame on the primary 80 MHz channel.

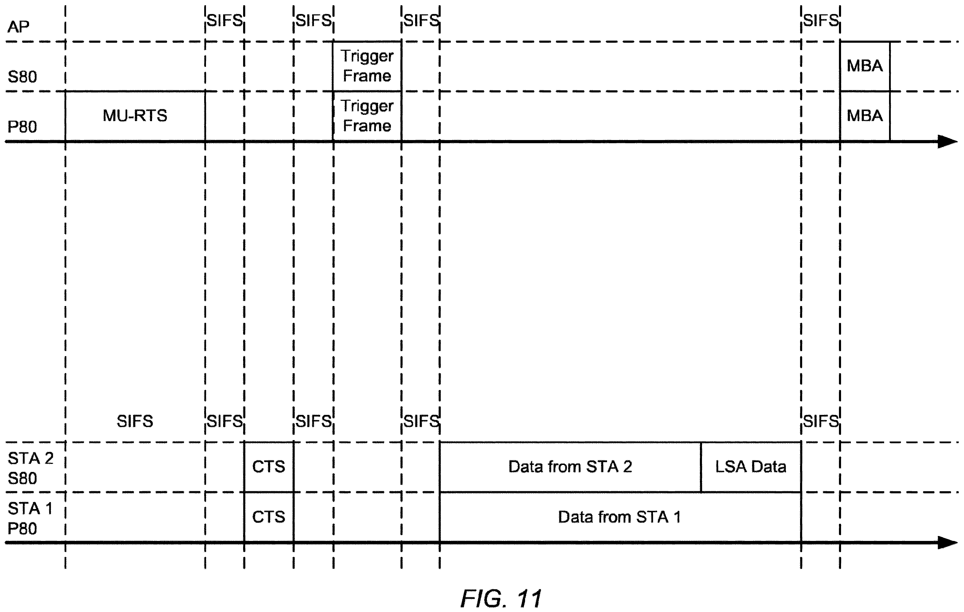

In some instances, to handle unbalanced traffic (e.g., different transmit opportunities) among multiple stations during uplink data transmissions, multiple traffic identifier (MTID) aggregation may be used to piggyback higher priority QoS data for latency sensitive applications, e.g., as illustrated by Figure 11. As shown, an access point may, such as AP 112, may transmit a MU-RTS frame on a primary 80 MHz channel. The MU-RTS frame may include user information fields for a first wireless station (e.g., STA1) and a second wireless station (e.g., STA2). Note that the first and second wireless stations may each be a wireless station 106. Note further that the second wireless station may be eMLSR-SC capable. The user information field may indicate a resource unit (RU) index and a sub-channel (e.g., via a B0 parameter) for the first and second wireless stations to use for communications with the access point. After a SIFS, the first wireless station may transmit a CTS frame to the access point on the primary 80 MHz channel and the second wireless station may transmit a CTS frame to the access point on the primary 80 MHz channel. After another SIFS, the access point may transmit a basic trigger frame on the primary 80 MHz channel to the first wireless station and a basic trigger frame of the secondary 80 MHz channel to the second wireless station. Then after another SIFS, the first wireless station may transmit data on the primary 80 MHz channel and the second wireless station may transmit data on the secondary 80 MHz channel. In addition, Multiple Traffic Identifier (MTID) aggregation may be used to piggy back higher priority data for latency sensitive applications on the secondary 80 MHz channel after the data transmitted by the second wireless station to align an endpoint of the data with data transmitted from the first wireless station. Further, after another SIFS, the access point may transmit a multi-station block acknowledgement (MBA) frame on the primary 80 MHz channel and the secondary 80 MHz channel.

In some instances, to support downlink sounding reference frames, a MU-RTS frame may be used by an access point to inform an eMLSR-SC capable wireless station, such as wireless station 106, to switch to secondary channel (e.g., a user information field may be used to communicate an RU index for a secondary channel). Then, a CTS frame and/or a BSR frame may be transmitted by the eMLSR-SC capable wireless station to indicate that is has completed the channel switch (e.g., a CTS frame may be transmitted on a secondary 80 MHz channel). Then, a downlink sounding reference frame may be transmitted on the secondary channel. In some instances, the downlink sounding reference frame may transmitted on a full bandwidth, e.g., for a wireless station on a primary 80 MHz channel and a wireless station on a secondary 80 MHz channel. Thus, a wireless station may be required to support mixed bandwidth sounding as well as partial bandwidth sounding feedback (e.g., sounding feedback on the channel the wireless station is on).

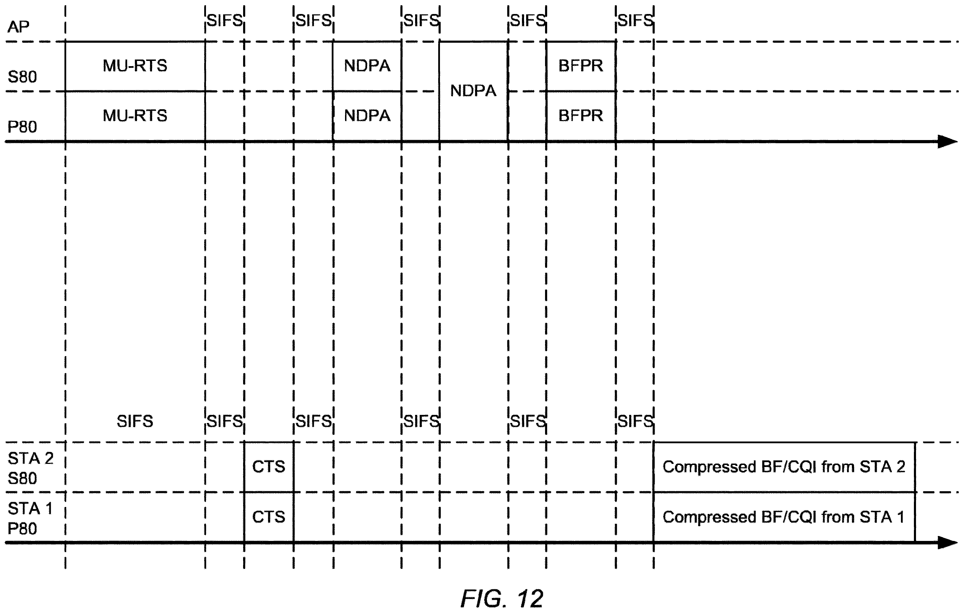

For example, Figure 12 illustrates an example of signaling between an access point and one or more wireless stations to support downlink sounding reference frames, according to some embodiments. As shown, an access point, such as AP 112, may transmit a MU-RTS frame on a primary sub-channel (e.g., a primary 80 MHz channel of a 160 MHz channel) and a secondary sub-channel (e.g., a secondary 80 MHz channel of the 160 MHz channel). Each MU-RTS frame may include one or more user information fields corresponding to one or more wireless stations. Each user information field may indicate a RU index and channel/sub-channel for a corresponding wireless station to operate on for communications with the access point. Thus, as shown, a first wireless station (e.g., STA1) may receive a MU-RTS frame indicating operations on the primary sub-channel and a second wireless station (e.g., STA2) may receive a MU-RTS frame indicating operations on the secondary channel. Note that the second wireless station may be an eMLSR-SC capable wireless station, e.g., such as wireless station 106. After a SIFS, the first wireless station may respond to the MU-RTS frame with a CTS frame transmitted on the primary sub-channel and the second wireless station may response to the MU-RTS frame with a CTS frame transmitted on the secondary sub-channel. After another SIFS, the access point may transmit a null data packet announcement (NDPA) frame on the primary sub-channel and the secondary sub-channel. Each NDPA frame may include one or more station information fields corresponding to one or more wireless stations. Each station information field may indicate partial bandwidth information for a corresponding wireless station. Thus, upon receipt of the NDPA frame, the first wireless station may determine a partial bandwidth to receive a sounding reference frame and the second wireless station may also determine a partial bandwidth to receive the sounding reference frame. Then, after another SIFS, the access point may transmit a full bandwidth null data packet (NDP) frame, e.g., on the 160 MHz channel. Further, after a SIFS, the access point may transmit a beamforming report poll (BFRP) frame on the primary sub-channel and the secondary sub-channel. Each BFRP frame may include one or more user information fields corresponding to one or more wireless stations. Each user information field may indicate a RU index and channel/sub-channel for a corresponding wireless station to operate on for communications with the access point. Thus, after a SIFS, the first wireless station may respond on the primary sub-channel with a compressed beamforming/channel quality index (BF/CQI) report frame and the second wireless station may respond on the secondary sub-channel with a compressed BF/CQI) report frame. Note that each BF/CQI report frame may correspond to a partial bandwidth as indicated by an NDPA frame.

In some instances, e.g., such as for an access point, such as AP 112, capable of operating on a 320 MHz bandwidth, wireless stations may operate on up to four 80 MHz sub-channels on a 6 GHz band. In addition, to enable multi-user transmissions, more than one wireless station may share a sub-channel. The access point may also operate on a160 MHz bandwidth on either the 6 GHz band or a 5 GHz band and in such instances, wireless stations may operate on up to two 80 MHz sub-channels. Note that other configurations are also possible, e.g., such as an access point bandwidth configuration of 40 MHz with wireless stations operating on up to two 20 MHz sub-channels and/or an access point bandwidth configuration of 80 MHz with wireless stations operating on up to two 40 MHz sub-channels. Table 1 summarizes possible bandwidth configurations for access point bandwidth configurations of 80 MHz and 160 MHz, at least according to some embodiments.

**Table 1: Sub-channel configurations based on AP operating bandwidth**

| **Operating Band** | **AP Bandwidth Configuration** | **Wireless Station Bandwidth Configuration** | **Number of Sub-channels** |
|---|---|---|---|
| 5 GHz | 160 MHz | 80 MHz | 2 |
| 6 GHz | 160 MHz | 80 MHz | 2 |
| | 320 MHz | 80 MHz | 4 |
| | | 160 MHz | 2 |

In some instances, an access point, such as AP 112, may support eMLSR-SC only wireless stations or may support both eMLSR and eMLSR-SC wireless stations associated in the same basic service set (BSS). In instances in which the access point supports eMLSR-SC only wireless stations, when the access point transmits an initial control frame (ICF), an eMLSR-SC only wireless station may listen on a single band and switch channels between a primary channel and a secondary channel, e.g., based on the ICF. In instances in which the access point supports eMLSR and eMLSR-SC wireless stations, when the access point transmits an ICF, an eMLSR wireless station may listen on multiple bands and switch operating bands based on the ICF and an eMLSR-SC wireless station may listen on multiple bands and (1) switch channels between primary and secondary channels for eMLSR-SC operation or (2) switch operating band for eMLSR operation, e.g., based on the ICF.

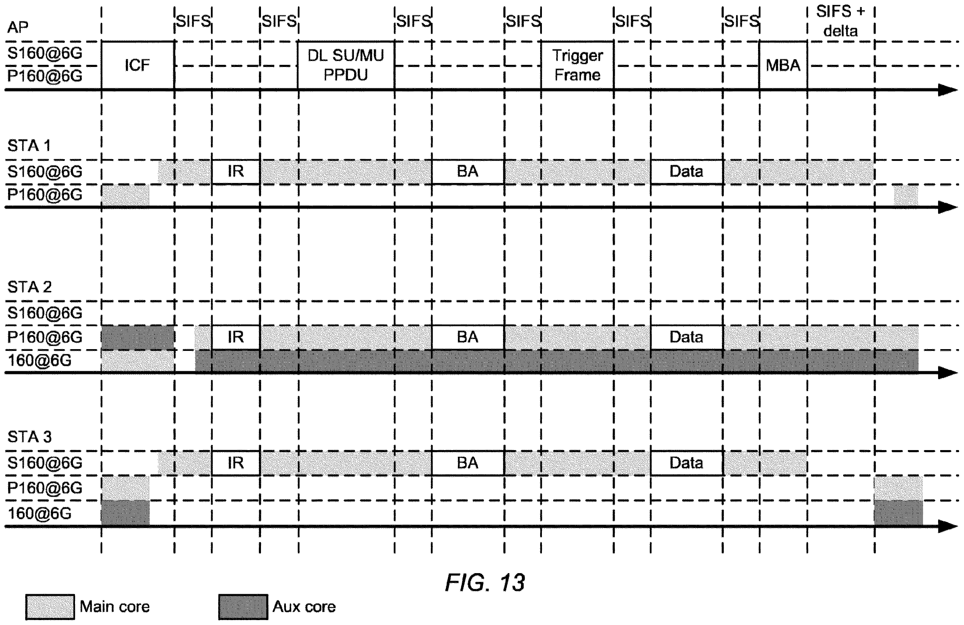

For example, as illustrated by Figure 13, an access point, such as AP 112, may transmit an ICF across a primary 160 MHz channel (or band) and a secondary 160 MHz channel (or band). As illustrated by the signaling of STA1, which may be a wireless station 106, in instances in which the access point supports eMLSR-SC only wireless stations in a BSS, STA1 may monitor (or listen) on the primary 160 MHz channel (or band) and, upon receipt of the ICF, may switch to the secondary 160 MHz channel (or band) to perform communications (e.g., receiving and acknowledging downlink data and/or transmitting uplink data). As illustrated by the signaling of STA2 and STA3, which may each be a wireless station 106, in instances in which the access point supports eMLSR (e.g., STA2) and eMLSR-SC (e.g., STA3) wireless stations in a BSS, the eMLSR wireless station (e.g., STA2) may monitor (or listen) on both the primary 160 MHz channel (or band) and the secondary 160 MHz channel (or band) and, upon receipt of the ICF, may switch a main (or primary) radio (or core) to a different operating channel (or band), e.g., as shown. Further, the eMLSR-SC (e.g., STA3) wireless station may monitor (or listen) on both the primary 160 MHz channel (or band) and the secondary 160 MHz channel (or band) and, upon receipt of the ICF, may switch a main (or primary) radio (or core) to a secondary channel (or band), e.g., as shown.

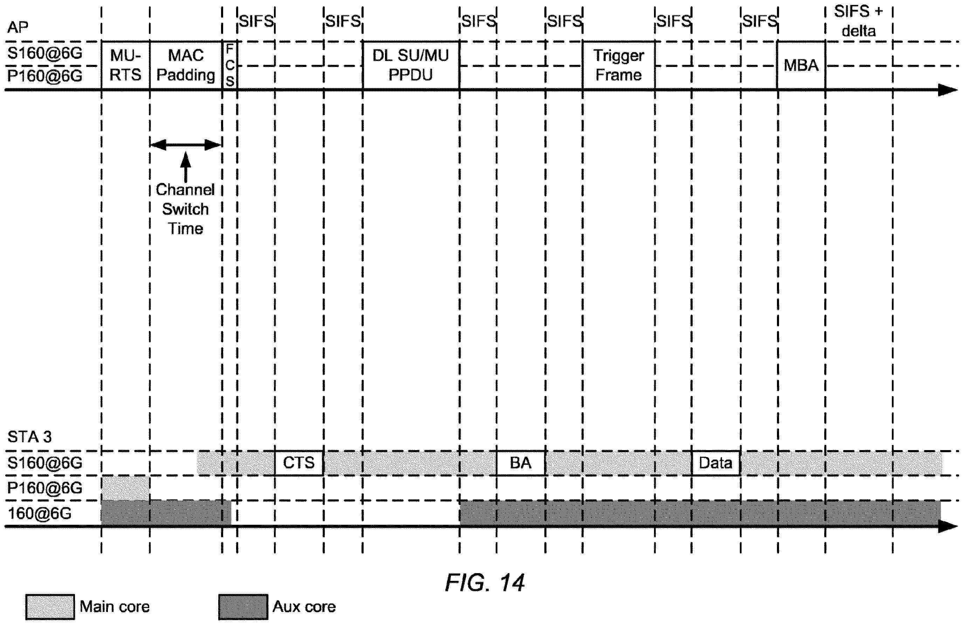

In some instances, to support co-existence, when a main (or primary) core (or radio) of an eMLSR-SC wireless station, such as wireless station 106, receives a MU-RTS from an access point, such as AP 112, the eMLSR-SC wireless station may initiate a channel switch or its main radio (or core) during a medium access control (MAC) padding portion of the MU-RTS in order to transmit a CTS in a next transmit opportunity, e.g., as illustrated by Figure 14. However, after the channel switch, the main radio may be unable to verify a frame check sum (FCS) of the MU-RTS.

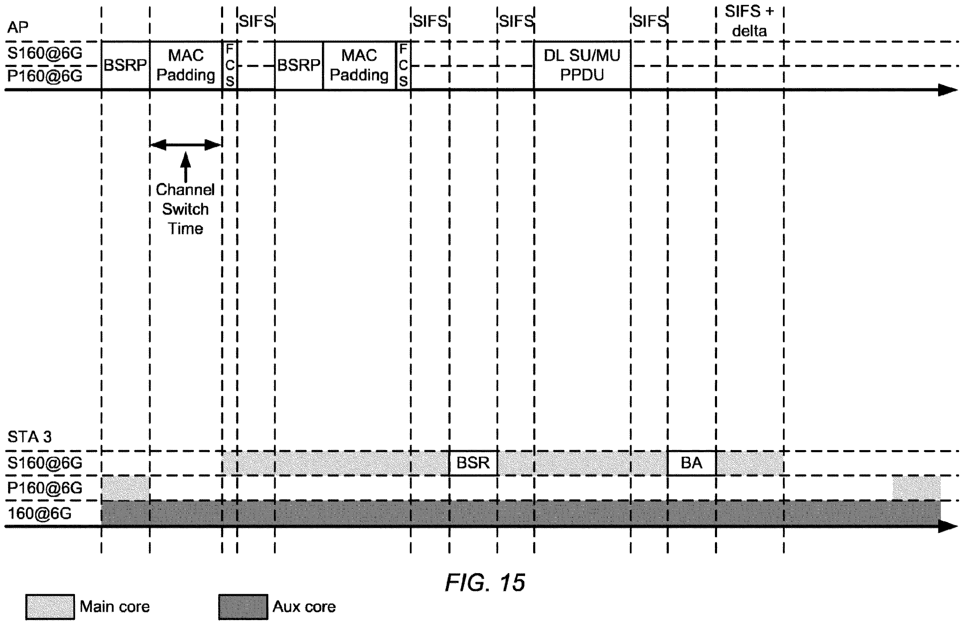

Thus, in some instances, prior to sending an ICF, e.g., such as a BSRP, an access point, such as AP 112, may transmit an initial or special ICF (e.g., an ICF that may trigger a channel switch but not solicit a response) to allow an eMLSR-SC wireless station, such as wireless station 106, to perform a channel switch and still verify an FCS of the ICF. For example, an initial/special BSRP frame may be transmitted by the access point prior to a regular BSRP frame, e.g., as illustrated by Figure 15. The initial/special BSRP frame may trigger a channel switch but may not solicit a response frame from the eMLSR-SC wireless station. After the switch, the access point may transmit a BSPR frame that solicits a response frame and the eMLSR-SC wireless station may verify the FCS.

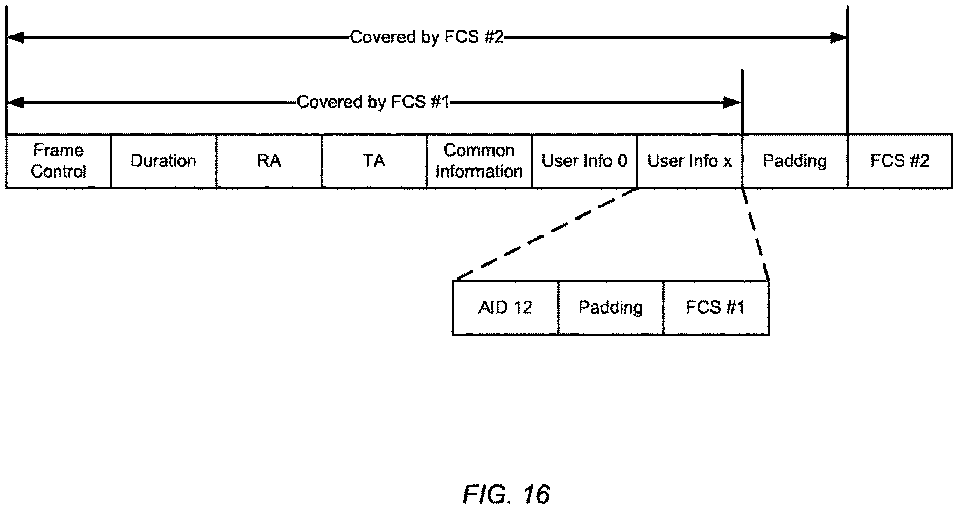

In some instances, to support co-existence between multiple radios/channels, a modified ICF may be introduced, e.g., as illustrated by Figure 16. As shown, a user information field may be modified to include a 2 byte FCS. In such instances, a reserved value (e.g., such as 0xffb) may be used to indicate to a wireless station, such as wireless station 106, a start of MAC padding.

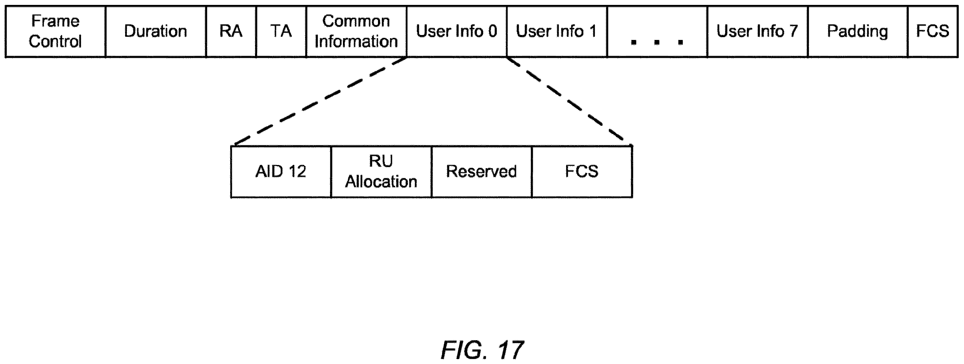

In some instances, to support co-existence between multiple radios/channels, a modified MU-RTS frame may be introduced, e.g., as illustrated by Figure 17. As shown, a user information field may be modified to include a 2 byte FCS. In some instances, the 16 most significant bits (MSBs) of the user information field by be redefined to be the 2 byte FCS.

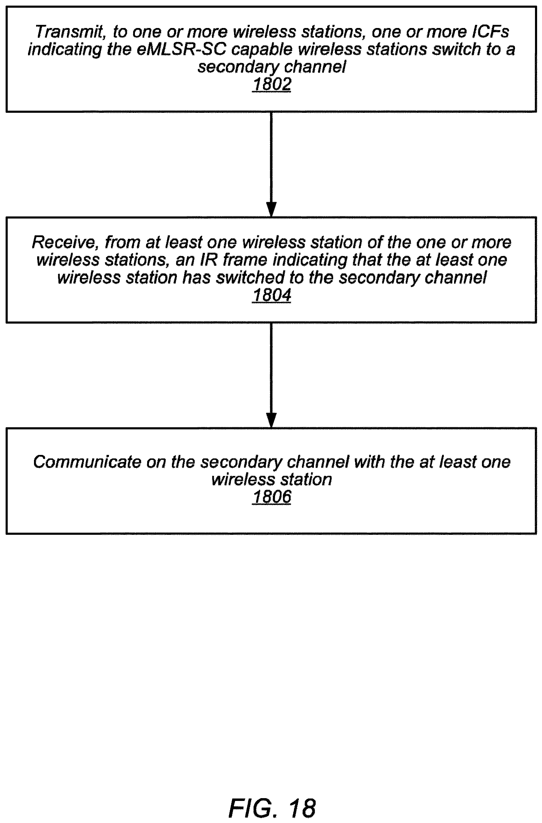

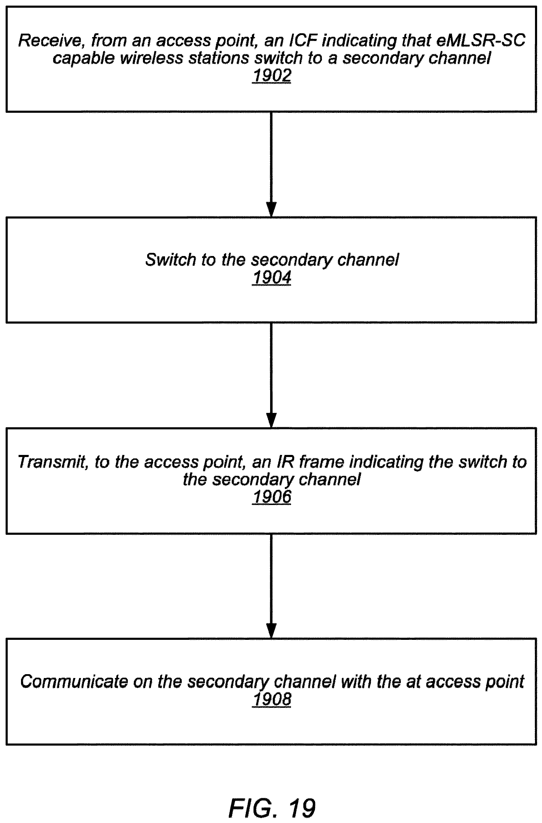

Figures 18 and 19 illustrate block diagrams of examples of methods for wireless communications, according to some embodiments. The methods shown in Figures 18 and 19 may be used in conjunction with any of the systems, methods, or devices shown in the Figures, among other devices. In various embodiments, some of the method elements shown may be performed concurrently, in a different order than shown, or may be omitted. Additional method elements may also be performed as desired.

Turning to Figure 18, as shown, this method may operate as follows.

At 1802, an access point, such as AP 112, may transmit, to one or more wireless stations (e.g., such as one or more wireless stations 106), one or more initial control frames (ICFs). The ICFs may indicate that enhanced multilink single-radio (eMLSR) secondary channel (SC) capable wireless stations are to switch to a secondary channel. In some instances, each ICF may include padding to allow eMLSR-SC capable wireless stations to switch to the secondary channel. The one or more ICFs may be transmitted on a primary channel and the secondary channel. In some instances, the primary channel may have an 80 megahertz (MHz) bandwidth and the secondary channel may have an 80 MHz bandwidth. In some instances, the primary channel may have a 160 MHz bandwidth and the secondary channel may have a 160 MHz bandwidth.

In some instances, each ICF may include a user information field. The user information field may indicate that eMLSR-SC capable wireless stations are to switch to the secondary channel. In some instances, the user information field may include a resource unit index and a bandwidth index. In some instances, the resource unit index in combination with the bandwidth index may indicate that eMLSR-SC capable wireless stations are to switch to a secondary channel. In some instances, user information field may include a frame check sum (FCS) field. The FCS field may protect from the beginning of a MAC service data unit (MSDU) to an end of the user information field. The FCS field may include a two-byte FCS.

In some instances, each ICF may be a multi-user (MU) request-to-send (RTS) frame. In such instances, the MU-RTS frame may include one or more user information fields and each user information field of the one or more user information fields includes a frame check sum (FCS) field. The FCS field may include a two-byte FCS.

In some instances, each ICF may be a buffer status report poll (BSRP) frame. The BSRP frame may include one or more user information fields and each user information field of the one or more user information fields includes a frame check sum (FCS) field. The FCS field may include a two-byte FCS.

At 1804, the access point may receive, from at least one wireless station of the one or more wireless stations, an immediate response (IR) frame. The IR frame may indicate that the at least one wireless station has switched to the secondary channel. In other words, the at least one wireless station may be an eMLSR-SC capable wireless station.

At 1806, the access point may communicate on the secondary channel with the at least one wireless station. In some instances, to communicate on the secondary channel with the at least one wireless station, the access point may transmit, to the at least one wireless station, downlink (DL) multi-user (MU) physical layer packet data unit (PPDU) via DL Orthogonal Frequency-Division Multiple Access (OFDMA). In some instances, to communicate on the secondary channel with the at least one wireless station, the access point may transmit, to the at least one wireless station, downlink (DL) multi-user (MU) physical layer packet data unit (PPDU) via DL MU multi-input-multi-output (MIMO).

In some instances, to communicate on the secondary channel with the at least one wireless station, the access point may receive, from the at least one wireless station on the secondary channel, an acknowledgement frame and/or a block acknowledgment (BA) frame. In addition, the access point may transmit, to the at least one wireless station after transmitting downlink data on the secondary channel and prior to receiving the BA frame, a multi-user (MU) block acknowledgment request (BAR) frame.

In some instances, to communicate on the secondary channel with the at least one wireless station, the access point may transmit, to the at least one wireless station on the secondary channel, a trigger frame. In addition, the access point may receive, from the at least one wireless station on the secondary channel, data via a trigger-based physical layer packet data unit (TB PPDU) format. In some instances, resources for the data are indicated via a user information field included in the trigger frame. The user information field may include a resource unit index and a bandwidth index. In some instances, the resource unit index in combination with the bandwidth index may indicate the resources. In some instances, end-of-frame padding may be used to align an end point of the data from the at least one wireless station with data received from another wireless station of the one or more wireless stations on a primary channel. In some instances, multiple traffic identifier (MTID) aggregation may be used to piggyback higher priority quality of service (QoS) data for latency sensitive applications with the data to align an end point of the data from the at least one wireless station with data received from another wireless station of the one or more wireless stations on a primary channel.

In some instances, the access point may transmit, to the one or more wireless stations, null data packet announcement (NDPA) frames on a primary channel and the secondary channel. In addition, the access point may transmit, to the one or more wireless stations, null data packet (NDP) frames on the primary channel and the secondary channel. Further, the access point may receive, from the at least one wireless station on the secondary channel, a compressed beamforming frame and/or a compressed channel quality index (CQI) frame.

Turning to Figure 19, at 1902, a wireless station, such as wireless station 106 may receive, from an access point, such as access point 112, an initial control frame (ICF). The ICF may indicate that the wireless station is to switch to a secondary channel. In such instances, the wireless station may be an enhanced multilink single-radio (eMLSR) secondary channel (SC) capable wireless station. In some instances, the ICF may include padding to allow eMLSR-SC capable wireless stations (e.g., the wireless station) to switch to the secondary channel. The ICF may be transmitted on a primary channel and the secondary channel. In some instances, the primary channel may have an 80 megahertz (MHz) bandwidth and the secondary channel may have an 80 MHz bandwidth. In some instances, the primary channel may have a 160 MHz bandwidth and the secondary channel may have a 160 MHz bandwidth.

In some instances, the ICF may include a user information field. The user information field may indicate that eMLSR-SC capable wireless stations (e.g., the wireless station) are to switch to the secondary channel. In some instances, the user information field may include a resource unit index and a bandwidth index. In some instances, the resource unit index in combination with the bandwidth index may indicate that eMLSR-SC capable wireless stations (e.g., the wireless station) are to switch to a secondary channel. In some instances, user information field may include a frame check sum (FCS) field. The FCS field may protect from the beginning of a MAC service data unit (MSDU) to an end of the user information field. The FCS field may include a two-byte FCS.

In some instances, the ICF may be a multi-user (MU) request-to-send (RTS) frame. In such instances, the MU-RTS frame may include one or more user information fields and each user information field of the one or more user information fields includes a frame check sum (FCS) field. The FCS field may include a two-byte FCS.

In some instances, each ICF may be a buffer status report poll (BSRP) frame. The BSRP frame may include one or more user information fields and each user information field of the one or more user information fields includes a frame check sum (FCS) field. The FCS field may include a two-byte FCS.

At 1904, the wireless station may switch to the secondary channel, e.g., based on information included in the ICF. In some instances, the wireless station may switch to the secondary channel during padding included in the ICF to allow the wireless station to switch to the secondary channel.

At 1906, the wireless station may transmit, to the access point, an immediate response (IR) frame. The IR frame may indicate that the wireless station has switched to the secondary channel.

At 1908, the wireless station may communicate on the secondary channel with the access point. In some instances, to communicate on the secondary channel with the access point, the wireless station may receive, from the access point, downlink (DL) multi-user (MU) physical layer packet data unit (PPDU) via DL Orthogonal Frequency-Division Multiple Access (OFDMA). In some instances, to communicate on the secondary channel with the access point, the wireless station may receive, from the access point, downlink (DL) multi-user (MU) physical layer packet data unit (PPDU) via DL MU multi-input-multi-output (MIMO).

In some instances, to communicate on the secondary channel with the access point, the wireless station may transmit, to the access point on the secondary channel, an acknowledgement frame and/or a block acknowledgment (BA) frame. In addition, the wireless station may receive, from the access point after receiving the downlink data on the secondary channel and prior to transmitting the BA frame, a multi-user (MU) block acknowledgment request (BAR) frame.

In some instances, to communicate on the secondary channel with the access point, the wireless station may receive, from the access point on the secondary channel, a trigger frame. In addition, the wireless station may transmit, to the access point on the secondary channel, data via a trigger-based physical layer packet data unit (TB PPDU) format. In some instances, resources for the data are indicated via a user information field included in the trigger frame. The user information field may include a resource unit index and a bandwidth index. In some instances, the resource unit index in combination with the bandwidth index may indicate the resources. In some instances, end-of-frame padding may be used to align an end point of the data from the wireless station with data received from another wireless station on a primary channel. In some instances, multiple traffic identifier (MTID) aggregation may be used to piggyback higher priority quality of service (QoS) data for latency sensitive applications with the data to align an end point of the data from the wireless station with data received from another wireless station on a primary channel.

In some instances, the wireless station may receive, from the access point, a null data packet announcement (NDPA) frame on the secondary channel. In addition, the wireless station may receive, from the access point, a null data packet (NDP) frame on the secondary channel. Further the wireless station may transmit, to the access point on the secondary channel, a compressed beamforming frame and/or a compressed channel quality index (CQI) frame.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Embodiments of the present disclosure may be realized in any of various forms. For example, some embodiments may be realized as a computer-implemented method, a computer-readable memory medium, or a computer system. Other embodiments may be realized using one or more custom-designed hardware devices such as ASICs. Other embodiments may be realized using one or more programmable hardware elements such as FPGAs.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a wireless device may be configured to include a processor (or a set of processors) and a memory medium, where the memory medium stores program instructions, where the processor is configured to read and execute the program instructions from the memory medium, where the program instructions are executable to cause the wireless device to implement any of the various method embodiments described herein (or, any combination of the method embodiments described herein, or, any subset of any of the method embodiments described herein, or, any combination of such subsets). The device may be realized in any of various forms.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method for wireless communication, comprising:
transmitting (1802), to one or more wireless stations (106), one or more initial control frames, ICFs, indicating that enhanced multilink single-radio, eMLSR, secondary channel, SC, capable wireless stations are to switch to a secondary channel;
receiving (1804), from at least one wireless station (106) of the one or more wireless stations (106), an immediate response, IR, frame that indicates that the at least one wireless station (106) has switched to the secondary channel; and
communicating (1806) on the secondary channel with the at least one wireless station (106).

2. The method of claim 1,
wherein the one or more ICFs are transmitted on a primary channel and the secondary channel;
wherein the primary channel has an 80 megahertz, MHz, bandwidth and the secondary channel has an 80 MHz bandwidth; or
wherein the primary channel has a 160 MHz bandwidth and the secondary channel has a 160 MHz bandwidth.

3. The method of claim 1,
wherein communicating on the secondary channel with the at least one wireless station (106) comprises transmitting, to the at least one wireless station (106), downlink, DL, multi-user, MU, physical layer packet data units, PPDUs, via DL Orthogonal Frequency-Division Multiple Access, OFDMA, or via DL MU multi-input-multi-output, MIMO.

4. The method of claim 1,
wherein at least one of the one or more ICFs includes a user information field indicating that eMLSR-SC capable wireless stations are to switch to the secondary channel;
wherein the user information field comprises a resource unit index and a bandwidth index; and
wherein the resource unit index in combination with the bandwidth index indicates that eMLSR-SC capable wireless stations are to switch to the secondary channel.

5. The method of claim 1,
wherein at least one of the one or more ICFs includes padding to allow eMLSR-SC capable wireless stations to switch to the secondary channel.

6. The method of claim 1,
wherein communicating on the secondary channel with the at least one wireless station (106) comprises:
receiving, from the at least one wireless station (106) on the secondary channel, an acknowledgement, ACK, or a block acknowledgment, BA, frame; and.
transmitting, to the at least one wireless station (106) after transmitting downlink data on the secondary channel and prior to receiving the BA frame, a multi-user, MU, block acknowledgment request, BAR, frame.

7. The method of claim 1,
wherein communicating on the secondary channel with the at least one wireless station (106) comprises:
transmitting, to the at least one wireless station (106) on the secondary channel, a trigger frame that includes a user information field that comprises a resource unit index and a bandwidth index, wherein the resource unit index in combination with the bandwidth index indicates one or more resources for data transmission; and
receiving, from the at least one wireless station (106) on the secondary channel, data via a trigger-based physical layer packet data unit, TB PPDU, format on the indicated one or more resources.

8. The method of claim 7,
wherein end-of-frame padding is used to align an end point of the data from the at least one wireless station (106) with data received from another wireless station (106) of the one or more wireless stations (106) on a primary channel.

9. The method of claim 7,
wherein multiple traffic identifier, MTID, aggregation is used to combine higher priority quality of service, QoS, data for latency sensitive applications with the data to align an end point of the data from the at least one wireless station (106) with data received from another wireless station (106) of the one or more wireless stations (106) on a primary channel.

10. The method of claim 1, further comprising:
transmitting, to the one or more wireless stations (106), null data packet announcement, NDPA, frames on a primary channel and the secondary channel;
transmitting, to the one or more wireless stations (106), null data packet, NDP, frames on the primary channel and the secondary channel; and
receiving, from the at least one wireless station (106) on the secondary channel, a compressed beamforming frame and/or a compressed channel quality index, CQI, frame.

11. The method of claim 1,
wherein at least one of the one or more ICFs includes a user information field that includes a frame check sum, FCS, field.

12. The method of claim 1,
wherein at least one of the one or more ICFs comprises a multi-user, MU, request-to-send, RTS, frame; and
wherein the MU-RTS frame comprises one or more user information fields, and wherein each user information field of the one or more user information fields includes a check sum, FCS, field.

13. The method of claim 1,
wherein at least one of the one or more ICFs comprises a buffer status report poll, BSRP, frame; and
wherein the BSRP frame comprises one or more user information fields, and wherein each user information field of the one or more user information fields includes a check sum, FCS, field.

14. An apparatus, comprising:
a memory (260); and
at least one processor (204) in communication with the memory (260) and configured to cause a device (112) to perform a method according to any of claims 1 to 13.

15. A non-transitory computer readable memory medium (260) storing program instructions executable by a processor (204) to perform a method according to any of claims 1 to 13.
